# FASCICULE DE BREVET EUROPEEN

(11) **EP 3 987 752 B1**
(45) Date de publication et mention de la délivrance du brevet: **08.01.2025**
(21) Numéro de dépôt: 20785775.6
(22) Date de dépôt: 18.06.2020
(51) Int. Cl.: H04L 45/74, H04L 61/251, H04L 61/4511

(54) **PROCEDE ET DISPOSITIF D'OBTENTION D'UNE ADRESSE IP**
VERFAHREN UND VORRICHTUNG ZUM EINER IP-ADRESSE ERHALTEN
METHOD AND DEVICE FOR OBTAINING AN IP ADDRESS

(30) Priorité: 20.06.2019 FR 1906673
(43) Date de publication de la demande: 27.04.2022
(73) Titulaire: Orange, 92130 Issy-les-Moulineaux (FR)
(72) Inventeur: BOUCADAIR, Mohamed, 92326 CHÂTILLON CEDEX (FR); JACQUENET, Christian, 92326 CHÂTILLON CEDEX (FR)
(86) Numéro de dépôt international: PCT/FR2020/051057
(87) Numéro de publication internationale: WO 2020/254766

(56) Documents cités:
- CN-A- 102 739 809
- FR-A1- 3 023 098
- MARCELO BAGNULO ET AL: "The NAT64/DNS64 tool suite for IPv6 transition", IEEE COMMUNICATIONS MAGAZINE, IEEE SERVICE CENTER, PISCATAWAY, US, vol. 50, no. 7, 1 July 2012 (2012-07-01), pages 177 - 183, XP011449622, ISSN: 0163-6804, DOI: 10.1109/MCOM.2012.6231295
- KORHONEN J ET AL: "Analysis of solution proposals for hosts to learn NAT64 prefix; draft-korhonen-behave-nat64-learn-analysis-00.txt", ANALYSIS OF SOLUTION PROPOSALS FOR HOSTS TO LEARN NAT64 PREFIX; DRAFT-KORHONEN-BEHAVE-NAT64-LEARN-ANALYSIS-00.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 17 October 2010 (2010-10-17), pages 1 - 24, XP015071744
- BOUCADAIR FRANCE TELECOM M: "Learn NAT64 PREFIX64s using PCP; draft-ietf-pcp-nat64-prefix64-00.txt", LEARN NAT64 PREFIX64S USING PCP; DRAFT-IETF-PCP-NAT64-PREFIX64-00.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 12 February 2013 (2013-02-12), pages 1 - 10, XP015089952
- PALET MARTINEZ THE IPV6 COMPANY J: "Additional NAT64/464XLAT Deployment Guidelines in Operator and Enterprise Networks; draft-ietf-v6ops-nat64-deployment-06.txt", no. 6, 4 May 2019 (2019-05-04), pages 1 - 43, XP015132806, Retrieved from the Internet <URL:https://tools.ietf.org/html/draft-ietf-v6ops-nat64-deployment-06> [retrieved on 20190504]
- MAWATARI JAPAN INTERNET EXCHANGE CO M ET AL: "464XLAT: Combination of Stateful and Stateless Translation; draft-ietf-v6ops-464xlat-06.txt", 464XLAT: COMBINATION OF STATEFUL AND STATELESS TRANSLATION; DRAFT-IETF-V6OPS-464XLAT-06.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 7 August 2012 (2012-08-07), pages 1 - 19, XP015086774

## Description

### Technique antérieure

La présente invention concerne le domaine général des télécommunications et plus particulièrement des services IP (Internet Protocol) à valeur ajoutée.

Les réseaux IP sont devenus les réseaux fédérateurs d'une multitude de services et d'applications. Pour anticiper les besoins accrus en termes d'adresses IP, les opérateurs, les constructeurs d'équipements réseau et les universitaires ont collaboré pour spécifier la nouvelle version du protocole IP, désignée IPv6 (Internet Protocol version 6). Les spécifications IPv6 sont aujourd'hui suffisamment matures. Ainsi, IPv6 fait l'objet d'un déploiement opérationnel dans la plupart des réseaux exploités par les opérateurs. Néanmoins, l'introduction de cette nouvelle version du protocole IP soulève des difficultés d'interopérabilité et d'interfonctionnement avec la version IPv4 par construction.

IPv4 reste encore majoritairement utilisé dans l'Internet (environ 75% du trafic), mais le réservoir d'adresses IPv4 est désormais tari. Pour rappel, les adresses IPv4 sont codées sur 32 bits (contre 128 bits pour les adresses IPv6). L'épuisement des adresses IPv4 fait donc du déploiement d'I Pv6 un enjeu majeur pour les opérateurs et fournisseurs de services IP.

La mise en place d'une stratégie de migration est toutefois compliquée par deux contraintes majeures :
- la nécessité de garantir la continuité des services IPv4 durant la période de transition en dépit de l'incapacité à fournir une adresse publique IPv4 à chaque client ; et
- l'incompatibilité entre les protocoles IPv4 et IPv6 qui complique l'interconnexion des deux mondes.

De plus, les opérateurs et fournisseurs de services doivent aussi prendre en compte diverses contraintes pour l'introduction d'I Pv6 dans les réseaux et les infrastructures de services, mais également concevoir de nouvelles architectures tirant partie des nouvelles fonctions intrinsèques d'IPv6.

L'activation d'I Pv6 ne doit donc pas être vue comme la mise en place d'un réseau Internet parallèle au réseau Internet IPv4 mais être conçue comme une évolution du réseau Internet actuel. Or, dans un contexte où les deux protocoles IPv4 et IPv6 coexistent, les communications entre des nœuds hétérogènes ne disposant que d'une seule pile IP (c'est-à-dire soit une pile IPv4, soit une pile IPv6) et donc d'un seul type de connectivité IPv4 ou IPv6 doivent en particulier être supportées. En outre, la version protocolaire utilisée pour l'établissement d'une session donnée doit être idéalement transparente pour l'utilisateur final. On note qu'un nœud qui ne dispose que d'une seule pile IP, c'est-à-dire uniquement d'une pile IPv4 (on parle alors de nœud IPv4-only) ou uniquement d'une pile IPv6 (on parle alors de nœud IPv6-only), n'est capable d'envoyer, de recevoir ou de traiter que des paquets conformes à la version de protocole mise en œuvre par cette pile IP, autrement dit que des paquets conformes au protocole IPv4 pour un nœud IPv4-only ou que des paquets conformes au protocole IPv6 pour un nœud IPv6-only.

Des mécanismes d'interconnexion IPv4-IPv6 doivent donc être déployés pour assurer une connectivité globale. L'accessibilité globale ne concerne pas seulement les destinations ayant une adresse appartenant à la même famille d'adresses (IPv4 ou IPv6) que celle de la source mais aussi les destinations appartenant à des domaines hétérogènes (c'est-à-dire n'importe quelle destination ayant une adresse IPv4 ou une adresse IPv6).

Sachant que le protocole IPv6 n'est pas compatible avec le protocole IPv4, les opérateurs de réseaux qui ont opté pour un déploiement s'appuyant uniquement sur le protocole IPv6 (c'est-à-dire « IPv6-only ») utilisent, pour assurer une continuité des services IPv4, une fonction de conversion de paquets IPv6 en des paquets IPv4 et inversement, incluant une fonction de traduction d'adresses IPv4 en adresses IPv6 (et inversement). Cette fonction, communément désignée par NAT64 (qu'on appelle également fonction de traduction de paquets IPv4 en paquets IPv6), est décrite dans le document RFC 6146 édité par I'IETF (Internet Engineering Task Force) en avril 2011 et intitulé « Stateful NAT64: Network Address and Protocol Translation from IPv6 Clients to IPv4 Servers ».

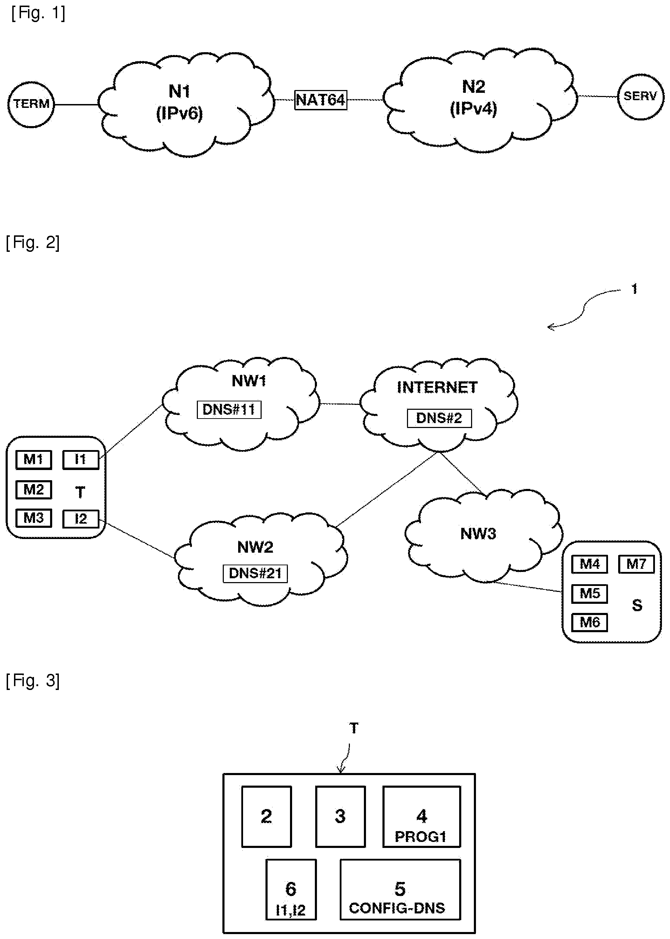

En référence à la **figure 1****,** on considère :
- un réseau N1 IPv6-only dans lequel seul un service de connectivité IPv6 est activé pour le transfert des paquets IP, et auquel est connecté un terminal TERM ne disposant que d'une pile IPv6 ; et
- un réseau N2 IPv4-only dans lequel seul un service de connectivité IPv4 est activé pour le transfert des paquets IP et auquel est connecté un serveur distant SERV qui n'est donc accessible qu'en IPv4.

Pour permettre au terminal TERM d'accéder au serveur distant SERV, une fonction NAT64 est sollicitée pour d'une part, utiliser une adresse IPv4 externe (et un numéro de port externe) qui permet d'établir une communication avec le serveur distant SERV, et d'autre part, maintenir l'association entre cette adresse IPv4 externe et l'adresse source IPv6 (ainsi que le numéro de port source) utilisée par le terminal TERM. A cet effet, la fonction NAT64 utilise des adresses IPv6 spécifiques qui contiennent des adresses IPv4, et telles que définies par I'IETF dans le document RFC 6052 intitulé « IPv6 Addressing of IPv4/IPv6 Translators », octobre 2010. De telles adresses IPv6 peuvent être de différents types, et plus particulièrement :
- de type « IPv4-embedded IPv6 » désignant une adresse IPv6 comprenant 32 bits correspondant à une adresse IPv4 parmi ses 128 bits;
- de type « IPv4-converted IPv6 » (variante de l'adresse de type « IPv4-embedded IPv6 ») désignant une adresse IPv6 représentant un nœud IPv4 dans un réseau IPv6 (en d'autres termes, un nœud IPv4 sera accessible avec cette adresse depuis un nœud IPv6-only) ; et
- de type « IPv4-translatable IPv6 » désignant une adresse IPv6 affectée à un nœud IPv6 permettant une interconnexion IPv6-IPv4 sans état.

Pour transformer une adresse IPv4 en une adresse « IPv4-embedded IPv6 » (et vice-versa), les opérateurs peuvent utiliser un préfixe dit NSP (pour « Network Specific Prefix ») faisant partie de leur préfixe IPv6 global ou un préfixe dit WKP (pour « Well-Known Prefix ») alloué par l'IETF, par exemple le préfixe "64:ff9b::/96" (d'autres préfixes WKP ont été réservés par l'IETF comme le préfixe « 64:ff9b::/48 »). On note que lorsque la longueur du préfixe utilisé est inférieure à 96, une notation hexadécimale est privilégiée pour représenter l'adresse IPv6 ainsi construite (en d'autres termes, l'adresse IPv4 incluse ne sera pas représentée en décimal). Ainsi, à titre illustratif, « 2001:db8:122:344:c0:2:2100:: » est le résultat de la construction d'une adresse IPv6 « fictive » à partir de l'adresse « 192.0.2.33 » utilisant un préfixe NSP « 2001:db8:122:344::/64 » ; « 64:ff9b::192.0.2.33 » est le résultat de la construction d'une adresse IPv6 « fictive » à partir de l'adresse 192.0.2.33 utilisant un préfixe WKP 64:ff9b::/96. La fonction NAT64 est configurée avec le préfixe NSP ou WKP selon différentes ingénieries pour construire des adresses IPv6 sur la base d'adresses IPv4 et vice versa. Le terme « fictives » désigne ici les adresses IPv4 traduites en adresses IPv6 par le serveur DNS par opposition à des adresses IPv6 « natives » qui sont allouées aux ressources disposant d'une connectivité IPv6.

Le document de M. Bagnulo et al. Intitulé « The NAT64/DNS64 Tool suite for IPv6 transition", IEEE Communication Magazine, Juillet 2012, pages 177-183, décrit les fonctions NAT64 et DNS64 utilisées pour la transition IPv4 vers IPv6 en permettant des communications entre des nœuds IPv4 et IPv6 non modifiés.

De façon connue en soi, un service DNS (pour « Domain Name System ») permet à un terminal d'un utilisateur (ou aux applications embarquées dans ce terminal), connecté à un réseau IP, d'obtenir à partir d'un nom de domaine, la ou les adresses IP (IPv4 et/ou IPv6) de la ressource réseau désignée par ce nom de domaine. On entend par ressource réseau tout type de dispositif ou d'équipement bénéficiant d'une connectivité IP et joignable via une adresse IP, tel que par exemple un serveur. Plusieurs modes de transport peuvent être envisagés pour l'échange des messages DNS incluant ceux définis récemment par l'IETF comme DNS-over-TLS, DNS-over-DTLS ou DoH (DNS-over-HTTP).

Le document FR 3 023 098 décrit un procédé et un système de traitement d'une demande de résolution d'un nom d'un serveur émise par une application cliente sur un réseau de communication.

Une ressource réseau disposant d'une connectivité IPv4 et donc joignable par l'intermédiaire d'une adresse IPv4 peut publier auprès du service DNS un enregistrement DNS de type A (ou A RR (Resource Record), en anglais), établissant la correspondance entre le nom de domaine qui lui est associé et son adresse IPv4. Une ressource réseau disposant d'une connectivité IPv6 et donc joignable en IPv6 peut publier un enregistrement de type AAAA (ou AAAA RR, en anglais). Une ressource réseau bénéficiant d'une connectivité IPv4 et d'une connectivité IPv6, et donc joignable via une adresse IPv4 et via une adresse IPv6, peut publier deux enregistrements de type A et AAAA respectivement. Les enregistrements RR de type A et AAAA sont décrits respectivement dans les documents IETF RFC1035 et RFC3596. La publication des enregistrements DNS est effectuée par la ressource réseau (par exemple, au moyen du mécanisme « Dynamic DNS ») ou par une autre entité (par exemple, administrateur). Dans la suite, aucune hypothèse n'est faite quant à la méthode utilisée pour la publication de tels enregistrements.

Selon le mode de fonctionnement actuel des services DNS, lorsqu'un terminal souhaite joindre une ressource réseau telle que par exemple un serveur, il envoie au service DNS une requête de résolution du nom de domaine dont il dispose pour accéder au serveur. Dans cette requête de résolution du nom de domaine, le terminal doit préciser le type d'enregistrement (A ou AAAA) qu'il souhaite en réponse à sa requête. Ainsi, un terminal qui supporte à la fois le protocole IPv4 et le protocole IPv6 doit envoyer deux requêtes au service DNS : une première requête indiquant un enregistrement de type A et destinée à obtenir une ou plusieurs adresses IPv4 de la ressource réseau (également désignée par « requête DNS d'obtention d'une adresse IPv4 » ou plus simplement par « requête DNS de type A » dans la suite de la description), et une deuxième requête indiquant un enregistrement de type AAAA et destinée à obtenir une ou plusieurs adresses IPv6 de la ressource réseau (également désignée par « requête DNS d'obtention d'une adresse IPv6 » ou plus simplement par « requête DNS de type AAAA » dans la suite de la description). L'activation d'IPv6 dans un réseau a donc des implications sur le dimensionnement des serveurs DNS, car deux requêtes de résolution de nom de domaine peuvent être émises pour une même ressource réseau. Ces implications sont d'autant plus importantes si ces deux requêtes doivent être émises simultanément (et non en séquentiel) afin d'optimiser les délais d'établissement des communications.

Les fournisseurs de connectivité IP qui ont fait le choix de déployer des fonctions NAT64 dans leurs réseaux déploient quasi systématiquement une fonction DNS64, configurée avec les mêmes préfixes que ceux utilisés par la fonction NAT64, afin de construire des adresses IPv6 de type « IPv4-converted IPv6 » sur la base des adresses IPv4 des serveurs IPv4-only. Cette ingénierie qui repose sur l'utilisation des fonctions NAT64 et DNS64 suppose en théorie qu'un terminal IPv6 n'émet vers le service DNS que des requêtes DNS de type AAAA (IPv6) et non de type A (IPv4). Cependant, en pratique, les déploiements actuels révèlent un comportement non optimal des terminaux qui envoient systématiquement deux requêtes DNS de type A et de type AAAA, pour une même ressource réseau. Comme indiqué précédemment, ce comportement des terminaux a des implications importantes sur le dimensionnement des serveurs DNS (doublement de la charge de traitement en raison des deux requêtes émises pour chaque résolution, impact sur la volumétrie du trafic DNS), mais aussi sur la latence induite lors de l'établissement des connexions des utilisateurs, qui peut entraîner une dégradation de la qualité du service de connectivité telle que perçue par les utilisateurs des terminaux.

Une solution à ce problème pourrait consister à restreindre par configuration le type des requêtes DNS émises par les terminaux connectés à un réseau IPv6-only. Toutefois, ceci ne constitue pas une solution viable.

En effet, de plus en plus d'opérateurs tiers (distincts des opérateurs fournissant les services de connectivité IP) proposent aujourd'hui aux utilisateurs des terminaux des services DNS publics. Selon ces opérateurs tiers, ces services DNS publics améliorent la qualité d'expérience des utilisateurs par rapport aux serveurs DNS exploités par les opérateurs de services de connectivité IP, et/ou offrent des fonctions de sécurité et de confidentialité avancées. Ainsi, certains opérateurs tiers indiquent fournir une réponse à une requête DNS en 11 ms alors que la moyenne observée chez les opérateurs de services de connectivité IP est de 68 ms. Face à de tels arguments, de plus en plus d'utilisateurs remplacent sur leurs terminaux (qu'ils soient fixes ou mobiles) la configuration de service DNS nominale fournie par leur opérateur de connectivité IP par une configuration faisant appel à un serveur DNS public.

Dans ce contexte, la restriction des requêtes DNS émises par des terminaux connectés à un réseau IPv6-only à un seul type de requêtes, en l'espèce AAAA, aurait pour conséquence d'interdire l'accès à ces terminaux aux serveurs IPv4-only, ce qui n'est ni souhaitable, ni acceptable.

### Exposé de l'invention

L'invention permet notamment de pallier les inconvénients de l'état de la technique en proposant un procédé d'obtention par un dispositif client, selon la revendication 1, d'une adresse IP pour accéder à une ressource réseau (associée par exemple à un nom de domaine) via au moins un réseau fournissant un service de connectivité IP au dispositif client, ce procédé étant mis en œuvre par le dispositif client et comprenant :
- une étape d'insertion, dans une requête d'obtention d'une adresse IPv6 pour accéder à la ressource réseau destinée au serveur DNS (autrement dit, dans une requête DNS de type AAAA telle que mentionnée précédemment), d'une information représentative d'un type d'adresse IP attendu par le dispositif client du serveur DNS en réponse à la requête d'obtention si la ressource réseau dispose d'une connectivité Ipv4 ; et
- une étape d'envoi de la requête au serveur DNS.

Corrélativement, l'invention concerne également un dispositif client selon la revendication 16 connecté à au moins un réseau fournissant au dispositif client un service de connectivité IP, ce dispositif client comprenant :
- un module d'insertion, configuré pour insérer dans une requête d'obtention d'une adresse IPv6 pour accéder à une ressource réseau via le réseau, destinée à un serveur DNS, d'une information représentative d'un type d'adresse IP attendu par le dispositif client du serveur DNS en réponse à la requête d'obtention si la ressource réseau dispose d'une connectivité IPv4 ; et
- un module d'envoi, configuré pour envoyer la requête d'obtention au serveur DNS.

Par exemple, dans un mode particulier de réalisation, l'information représentative du type d'adresse IP attendu et telle qu'insérée dans la requête DNS peut être au moins un préfixe IPv6 ou au moins une adresse IPv6 comprenant au moins un préfixe IPv6, si le type d'adresse IP attendu est une adresse IPv6 fictive formée par le serveur DNS à partir dudit au moins un préfixe IPv6 et d'une adresse IPv4 de la ressource réseau cible. Le préfixe IPv6 peut être notamment un préfixe utilisé par une fonction (ex. NAT64) de conversion de paquets (de données) IPv4 en paquets (de données) IPv6 (et vice versa) mise en œuvre par le réseau que le dispositif client envisage d'utiliser pour accéder à la ressource réseau, ou une adresse IP comprenant un tel préfixe.

En variante, l'information insérée peut être une valeur prédéfinie (par exemple une valeur nulle ou un autre préfixe dédié à cet usage), connue du serveur DNS, si le type d'adresse IP attendu est une adresse IPv4 de la ressource réseau.

Corrélativement, le dispositif client selon l'invention peut comprendre en outre un module de traduction d'adresses IPv4 en des adresses IPv6 activé sur réception d'une réponse du serveur DNS à ladite requête d'obtention et comprenant une adresse IPv4 de ladite ressource réseau, ledit module de traduction étant configuré pour traduire ladite adresse IPv4 en une adresse IPv6 en utilisant ladite adresse IPv4 et un préfixe IPv6 utilisé par une fonction de conversion de paquets IPv4 en paquets IPv6 mise en œuvre par le réseau.

L'information insérée par le dispositif client dans la requête d'obtention d'une adresse IPv6 permet donc à ce dernier de spécifier s'il attend, en réponse à cette requête d'obtention d'une adresse IPv6 (autrement dit dans la réponse à la requête d'obtention d'une adresse IPv6, c'est-à-dire dans la section « Answer Section » d'une réponse de type AAAA si la requête d'obtention est une requête DNS AAAA), une adresse IPv6 fictive ou une adresse IPv4 lorsque la ressource réseau dispose d'une connectivité IPv4.

On note que l'invention s'applique avantageusement quel que soit le serveur DNS avec lequel le dispositif client est configuré : il peut s'agir du serveur DNS que l'on désigne ici par « nominal » fourni par l'opérateur offrant le service de connectivité IP au dispositif client, par exemple lors de son attachement au réseau ou lors d'une configuration préalable (par exemple, une configuration « usine »), ou d'un serveur DNS alternatif, tel que par exemple un serveur DNS public que l'utilisateur du dispositif client a choisi d'utiliser en remplacement du serveur DNS nominal fourni par son opérateur. Ceci est rendu possible grâce à l'information fournie par le dispositif client au serveur DNS lorsqu'il l'interroge pour obtenir l'adresse IP de la ressource réseau à laquelle il souhaite accéder.

En outre, l'invention est décrite en référence à un réseau fournissant un service de connectivité IP au dispositif client. Il convient de noter que le dispositif client peut disposer simultanément de plusieurs interfaces de connexion actives permettant d'accéder à différents réseaux, chacun de ces réseaux lui fournissant une connectivité IP ; l'invention s'applique alors à chaque serveur DNS configuré pour chacune de ces interfaces de connexion actives. Un même serveur DNS peut être utilisé pour plusieurs interfaces de connexion actives, ou chaque interface de connexion active peut utiliser un serveur DNS distinct.

L'invention offre un mécanisme qui permet de réconcilier les besoins des fournisseurs de services (fournisseurs de connectivité IP et fournisseurs de DNS publics), les besoins des utilisateurs, mais aussi ceux des constructeurs de terminaux.

En effet, le mécanisme proposé par l'invention permet à un dispositif client, au moyen d'une unique requête de type AAAA (requête d'obtention d'une adresse IPv6 pour accéder à la ressource réseau au sens de l'invention), d'obtenir différents types d'adresses IP selon que la ressource réseau à laquelle il cherche à accéder bénéficie d'une connectivité IPv4, IPv6 ou des deux, en fonction des capacités du dispositif client qui fixe le type d'adresse IP qu'il souhaite recevoir si la ressource réseau dispose d'une connectivité IPv4. L'invention permet ainsi à un dispositif client IPv6-only d'accéder à des ressources réseau IPv4-only, IPv6-only ou IPv4/IPv6, sans surcharger inutilement le serveur DNS sollicité par le dispositif client et tout en économisant les ressources du dispositif client (notamment sa batterie s'il s'agit d'un dispositif mobile). Le trafic acheminé par les réseaux d'accès, et plus particulièrement la volumétrie du trafic DNS, est optimisé, et, par voie de conséquence, les délais d'établissement des communications sont également optimisés. Il en résulte une amélioration de la qualité d'expérience telle que perçue par les utilisateurs des dispositifs clients.

En outre, l'invention offre une liberté à l'utilisateur du dispositif client qui peut indifféremment utiliser le serveur DNS nominal de son opérateur de connectivité IP ou configurer son dispositif client avec un serveur DNS fourni par un opérateur tiers, comme par exemple un serveur DNS public tel que mentionné précédemment. Grâce à l'invention, il existe ainsi une forme de parité fonctionnelle entre les dispositifs clients utilisant les serveurs DNS nominaux offerts par leurs fournisseurs de connectivité IP et les dispositifs clients qui décident d'utiliser des services DNS alternatifs offerts par des prestataires tiers.

L'invention permet en outre de gérer différentes configurations possibles du réseau et notamment du serveur DNS utilisé pour ce réseau qui peut ou non embarquer une fonction DNS64 de traduction d'adresses IPv4 en adresses IPv6 pour faciliter la continuité de services.

Il convient de noter que certains dispositifs clients peuvent eux-mêmes embarquer un module de traduction d'adresses, aussi connu sous le nom de module ou fonction CLAT (pour « Customer side (Address) Translator ») ou BIH (Bump-in-the-Host), par exemple pour permettre à une application installée sur le dispositif client et qui ne peut fonctionner que sur une pile IPv4 d'émettre des messages à destination d'adresses IPv4 y compris lorsque le dispositif client ne dispose que d'une connectivité IPv6. Un tel module est décrit dans le document RFC 6877 de I'IETF intitulé « 464XLAT: Combination of stateful and stateless translation », avril 2013. Lorsqu'une fonction DNS64 est mise en œuvre par le serveur DNS consulté par le dispositif client pour accéder à une ressource, cette fonction DNS64 et le module CLAT du dispositif client sont alors redondants s'ils sont activés simultanément. L'invention permet d'éviter une telle redondance et de minimiser notamment le recours au module CLAT.

En particulier, dans l'exemple d'informations pouvant être insérées dans la requête d'obtention fourni ci-dessus, la valeur prédéfinie permet de gérer le cas où aucune fonction DNS64 n'est mise en œuvre par le serveur DNS consulté par le dispositif client ou de désactiver le recours à une fonction DNS64 supportée par ce serveur DNS. Dans ce cas, si le dispositif client implémente un module CLAT, il peut utiliser l'adresse IPv4 qui lui est retournée pour procéder lui-même à la traduction de cette adresse IPv4 en une adresse IPv6.

**Ainsi,** l'invention offre la possibilité d'éviter une redondance dans le cas où la fonction DNS64 est aussi supportée par le serveur DNS, mais également de permettre au dispositif client de gérer directement la construction d'adresses IPv6.

Si le serveur DNS met en œuvre une fonction DNS64, le dispositif client peut fournir au serveur DNS le préfixe à utiliser pour générer une adresse IPv6 fictive pour la ressource réseau IPv4-only ou double-pile (ou « dual stack » en anglais) (IPv4-IPv6) à partir de son adresse IPv4. L'adresse IPv6 ainsi formée par le serveur DNS64 est ensuite retournée au dispositif client dans la réponse du serveur DNS64. Le préfixe fourni est typiquement celui utilisé par une fonction NAT64 de conversion de paquets IPv4 en paquets IPv6 présente dans le réseau via lequel le dispositif client souhaite accéder à la ressource réseau.

L'invention s'applique donc également dans le cas de réseaux ne mettant pas en œuvre de fonction DNS64 et s'appuyant sur une mise en œuvre d'une telle fonction par les dispositifs clients eux-mêmes.

L'invention est donc particulièrement avantageuse dans le contexte de migration IPv4 vers IPv6 actuel décrit précédemment.

Dans un mode particulier de réalisation, la requête d'obtention peut comprendre en outre :
- une instruction pour générer ladite adresse au format IPv6 seulement si la ressource réseau dispose uniquement d'une connectivité IPv4 ; ou
- une instruction pour générer ladite adresse au format IPv6 si la ressource réseau dispose d'une connectivité IPv4 même si elle dispose également d'une connectivité IPv6.

Grâce à cette instruction supplémentaire insérée dans la requête d'obtention par le dispositif client lorsqu'il attend une adresse au format IPv6, on peut gérer de manière plus optimale le cas où une application IPv4-only configurée pour communiquer avec une ressource réseau IPv4-IPv6 est embarquée sur un dispositif client IPv6-only (qui embarque alors également un module CLAT). En effet, le dispositif client peut demander dans ce cas au serveur DNS de lui envoyer en réponse à sa requête non pas uniquement l'adresse IPv6 native de la ressource réseau (ce que va faire par défaut le serveur DNS sur réception d'une requête de type AAAA lorsque la ressource réseau dispose d'une connectivité IPv6), mais également son adresse IPv4 que le dispositif client peut alors fournir directement à l'application sans avoir besoin d'activer une fonction NAT46 pour transformer l'adresse IPv6 native de la ressource réseau en une adresse IPv4 qu'est en mesure d'utiliser l'application. On note que le dispositif client est capable de distinguer une adresse IPv6 fictive générée (i.e. formée) par le serveur DNS pour la ressource réseau d'une adresse IPv6 native de cette ressource réseau en cas de double connectivité de la ressource réseau, puisqu'il dispose des préfixes utilisés pour former les adresses IPv6 fictives.

Dans un autre mode de réalisation, la requête d'obtention peut en outre comprendre d'autres indications destinées au serveur DNS comme par exemple :
- une instruction pour exécuter un algorithme déterminé pour former une adresse IPv6 à partir d'une adresse IPv4 de la ressource réseau (par exemple l'algorithme défini dans le document RFC 6052 de I'IETF) ; et/ou
- une instruction pour utiliser un préfixe connu (WKP pour Well-Known Prefix) pour former une adresse IPv6 à partir d'une adresse IPv4 de la ressource réseau ; et/ou
- une instruction pour utiliser un suffixe qui garantit la neutralité d'un « checksum » (mécanisme de contrôle d'intégrité) d'un pseudo entête d'une couche transport ; et/ou
- une instruction pour retourner une ou des adresses IPv4 dans une section additionnelle d'une réponse à la requête d'obtention.

L'instruction pour utiliser le préfixe WKP peut s'avérer utile notamment dans un mode de réalisation dans lequel on souhaite que l'adresse IPv4 de la ressource réseau le cas échéant soit transmise au dispositif client dans le corps de la réponse du serveur DNS. Dans ce mode de réalisation, l'adresse IPv4 peut alors être codée selon un format IPv6 en utilisant le préfixe WKP.

Pour rappel, le pseudo-entête TCP couvre également les adresses source et destination de la couche IP. Ainsi, toute modification de ces adresses rend obsolète la vérification de contrôle à base du pseudo entête (appelée « checksum »). L'instruction pour utiliser un suffixe permet d'éviter de recalculer le « checksum » TCP lors de la transformation des paquets IPv4 en des paquets IPv6 et vice versa par une fonction NAT64 (ou CLAT). Si cette instruction n'est pas utilisée, la fonction NAT64 doit recalculer le « checksum » sur la base du nouveau pseudo entête.

Dans un mode particulier de réalisation, le procédé comprend en outre une étape de détermination si le réseau met en œuvre une fonction de conversion de paquets IPv4 en paquets IPv6 (et inversement) (c'est-à-dire, une fonction NAT64).

Le cas échéant, le procédé peut en outre comprendre une étape d'obtention d'au moins un préfixe IPv6 utilisé par ladite fonction de conversion (c'est-à-dire, NAT64).

Ceci permet au dispositif client de découvrir par lui-même dynamiquement si le réseau auquel il est connecté et qu'il envisage d'utiliser pour accéder à la ressource réseau met en œuvre ou non une fonction NAT64. Ce mode de réalisation présente un avantage particulier lorsque le dispositif client dispose de plusieurs interfaces réseau actives ou lorsqu'il change d'interface réseau. On note qu'aucune limitation n'est associée à la portion du réseau mettant en œuvre la fonction NAT64 : cette fonction peut être localisée dans le réseau d'accès, le cœur du réseau, ou dans un réseau d'interconnexion, etc.

En variante, le dispositif client peut être configuré avec cette information indépendamment de la mise en œuvre du procédé selon l'invention, par exemple dans le cadre d'une configuration « usine ». Cette variante est appropriée notamment pour des dispositifs clients tels que des CPE (pour « Customer Premises Equipment » en anglais).

Pour découvrir si le réseau met en œuvre ou non une fonction de conversion de paquets IPv4 en paquets IPv6, diverses techniques peuvent être envisagées.

**Ainsi,** dans un mode particulier de réalisation, le serveur DNS auquel le dispositif client envoie la requête d'obtention est un serveur distinct d'un serveur DNS dit « nominal » avec lequel le dispositif client a été configuré par un opérateur du réseau, et :
- l'étape de détermination comprend une étape d'envoi à un serveur DNS nominal d'une requête d'obtention d'une adresse IPv6 pour accéder à une ressource réseau donnée connue pour disposer uniquement d'une connectivité IPv4 ; et
- si une réponse positive est reçue du serveur DNS nominal comprenant une adresse IPv6 à utiliser pour accéder à la ressource réseau donnée, le dispositif client détermine que le réseau IP met en œuvre une fonction de traduction de paquets IPv4 en paquets IPv6 (fonction NAT64).

Dans ce mode de réalisation, le procédé peut en outre comprendre une étape d'obtention d'un préfixe IPv6 utilisé par la fonction de conversion de paquets IPv4 en paquets IPv6 à partir de l'adresse IPv6 contenue dans la réponse positive reçue du serveur DNS nominal.

Ce mode de réalisation nécessite la mémorisation au niveau du dispositif client des informations relatives à la configuration DNS nominale fournie par l'opérateur du réseau lui fournissant sa connectivité IP pour accéder à la ressource réseau si le dispositif client est ensuite configuré avec un serveur DNS alternatif. Il fournit toutefois une solution très simple à mettre en œuvre par le dispositif client pour découvrir dynamiquement si le réseau IP comporte une fonction NAT64, et ce, sans impliquer ladite fonction NAT64.

Dans un autre mode de réalisation, l'étape de détermination peut être mise en œuvre en utilisant le protocole Port Control Protocol (PCP).

Le protocole PCP est connu en soi et décrit notamment dans le document RFC 7225 de l'IETF intitulé « Discovering NAT64 IPv6 Prefixes Using the Port Control Protocol (PCP) », mai 2014.

Ce mode de réalisation présente l'avantage d'être fiable et déterministe car l'information de présence d'une fonction NAT64, ainsi que les préfixes utilisés par cette fonction, sont fournis le cas échéant par la fonction NAT64 elle-même qui se trouve sur le chemin des messages émis par le dispositif client. En outre, il permet de gérer le cas où plusieurs fonctions NAT64 sont mises en œuvre par l'opérateur du réseau.

Dans un autre mode de réalisation encore, le procédé d'obtention selon l'invention comprend :
- une étape de réception d'un message d'annonce en provenance du réseau comprenant au moins un préfixe IPv6 utilisé par une fonction de conversion de paquets IPv4 en paquets IPv6 mise en œuvre par le réseau; et
- une étape de mémorisation dudit au moins un préfixe IPv6 contenu dans le message d'annonce.

Dans ce mode de réalisation, le dispositif client utilise les informations annoncées par le réseau lui-même pour en déduire si ce dernier utilise une fonction NAT64, et le cas échéant obtenir le ou les préfixes que cette fonction utilise.

En outre, ce mode de réalisation n'implique pas la fonction NAT64 dans le processus de découverte et s'appuie sur des mécanismes de configuration connus en soi.

Dans un mode particulier de réalisation, l'étape de détermination est réitérée pour le réseau sur détection d'un changement affectant une configuration réseau du dispositif client pour ledit réseau.

Un tel changement est par exemple un changement du serveur DNS interrogé par le dispositif client pour accéder à une ressource via ce réseau ou une connexion à un nouveau réseau. L'invention permet ainsi de s'adapter dynamiquement et de manière transparente pour l'utilisateur du dispositif client aux changements de configuration du dispositif client, et notamment de configuration DNS (par exemple lorsque l'utilisateur décide d'utiliser un serveur DNS alternatif en remplacement de son serveur DNS nominal ou si un changement de configuration DNS est décidé par l'opérateur du réseau).

Au vu de ce qui précède, l'invention s'appuie sur le dispositif client et le procédé d'obtention mis en œuvre par celui-ci, mais également sur le serveur DNS qui traite les requêtes DNS provenant du dispositif client et le procédé de traitement exécuté par ce dernier.

Ainsi, l'invention vise également un procédé de traitement selon la revendication 11, par un serveur DNS associé à un réseau fournissant un service de connectivité IP à au moins un dispositif client, ce procédé comprenant :
- une étape de réception, en provenance d'un dispositif client, d'une requête d'obtention d'une adresse IPv6 pour accéder à une ressource réseau, requête dans laquelle est insérée une information représentative d'un type d'adresse IP attendu par le dispositif client du serveur DNS en réponse à la requête d'obtention si la ressource réseau dispose d'une connectivité IPv4 ;
- si la ressource réseau dispose d'une connectivité IPv6, une étape d'envoi au dispositif client, en réponse à la requête, d'une adresse IPv6 de ladite ressource réseau ;
- si la ressource réseau dispose d'une connectivité IPv4 :
   une étape d'obtention d'une adresse IPv4 de la ressource réseau ; et
   une étape d'envoi d'une réponse à la requête d'obtention contenant au moins une adresse IP pour accéder à la ressource réseau déterminée par le serveur DNS à partir de l'adresse IPv4 obtenue et correspondant au type d'adresse IP attendu par le dispositif client.

Corrélativement, l'invention concerne un serveur DNS selon la revendication 18 comprenant :
- un module de réception, apte à recevoir en provenance d'un dispositif client connecté à un réseau fournissant au dispositif client un service de connectivité IP, une requête d'obtention d'une adresse IPv6 pour accéder à une ressource réseau via ledit réseau IP ;
- un module de détection, configuré pour détecter dans la requête d'obtention, une information représentative d'un type d'adresse IP attendu par le dispositif client du serveur DNS en réponse à la requête d'obtention si la ressource réseau dispose d'une connectivité IPv4 ;
- un module d'envoi, activé si la ressource réseau dispose d'une connectivité IPv6, et configuré pour envoyer au dispositif client, en réponse à la requête d'obtention, une adresse IPv6 de la ressource réseau ;
- des modules, activés si la ressource réseau dispose d'une connectivité IPv4, comprenant :
   un module d'obtention configuré pour obtenir une adresse IPv4 de la ressource ; et
   un module d'envoi, configuré pour envoyer une réponse à la requête d'obtention contenant au moins une adresse IP pour accéder à la ressource réseau déterminée par le serveur DNS à partir de ladite adresse IPv4 obtenue et correspondant au type d'adresse IP attendu par le dispositif client indiqué par l'information insérée dans la requête d'obtention.

Le procédé de traitement et le serveur DNS selon l'invention bénéficient des mêmes avantages cités précédemment que le procédé d'obtention et le dispositif client selon l'invention.

L'invention offre en outre la possibilité à un serveur DNS de répondre à une requête d'obtention d'une adresse IPv6 avec une adresse IPv4 lorsque la ressource réseau dont le dispositif client cherche à obtenir une adresse dispose d'une connectivité IPv4, et que le dispositif client indique qu'il attend en réponse à sa requête d'obtention d'une adresse IPv6 une adresse IPv4.

Dans un mode particulier de réalisation, l'information insérée dans la requête d'obtention comprend au moins un préfixe IPv6 ou au moins une adresse IPv6 comprenant au moins un préfixe IPv6 et ladite au moins une adresse IP déterminée par le serveur DNS comprend au moins une adresse IPv6 formée par le serveur DNS à partir dudit au moins un préfixe IPv6 et de l'adresse IPv4 de la ressource réseau obtenue.

En variante, l'information insérée dans la requête d'obtention peut avoir une valeur prédéfinie connue du serveur DNS, et ladite au moins une adresse IP déterminée par le serveur DNS est alors l'adresse IPv4 de la ressource réseau obtenue.

On note que l'adresse IPv4 de la ressource réseau peut être envoyée dans la réponse du serveur DNS codée selon le format IPv4 dans une section additionnelle de la réponse.

En variante, l'adresse IPv4 peut être transmise dans le corps de la réponse du serveur DNS, codée selon le format IPv6, par exemple en utilisant le préfixe « ::ffff:0:0/96 ».

Dans un mode particulier de réalisation, l'étape d'envoi et l'étape d'obtention sont mises en œuvre par le serveur DNS seulement si la ressource réseau dispose uniquement d'une connectivité IPv4. Autrement dit, si la ressource réseau dispose également d'une connectivité IPv6 en plus d'une connectivité IPv4, c'est l'adresse IPv6 de la ressource réseau qui est envoyée par défaut en réponse à la requête d'obtention de type AAAA au dispositif client.

Dans un autre mode de réalisation, les étapes d'envoi et d'obtention sont mises en œuvre dès lors que la ressource réseau dispose d'une connectivité IPv4, même si elle dispose par ailleurs d'une connectivité IPv6. L'avantage de ce mode de réalisation a été décrit précédemment et n'est pas repris ici.

Dans un mode particulier de réalisation le procédé d'obtention et/ou le procédé de traitement sont mis en œuvre par un ordinateur.

L'invention vise également un premier programme d'ordinateur sur un support d'enregistrement, ce programme étant susceptible d'être mis en œuvre dans un ordinateur ou plus généralement dans un dispositif client conforme à l'invention et comporte des instructions adaptées à la mise en œuvre d'un procédé d'obtention tel que décrit ci-dessus.

L'invention vise aussi un deuxième programme d'ordinateur sur un support d'enregistrement, ce programme étant susceptible d'être mis en œuvre dans un ordinateur ou plus généralement dans un serveur DNS conforme à l'invention et comporte des instructions adaptées à la mise en œuvre d'un procédé de traitement tel que décrit ci-dessus.

Chacun de ces programmes peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'information ou un support d'enregistrement lisibles par un ordinateur, et comportant des instructions du premier ou du deuxième programme d'ordinateur mentionné ci-dessus.

Les supports d'information ou d'enregistrement peuvent être n'importe quelle entité ou dispositif capable de stocker les programmes. Par exemple, les supports peuvent comporter un moyen de stockage, tel qu'une ROM, par exemple un CD ROM ou une ROM de circuit microélectronique, ou encore un moyen d'enregistrement magnétique, par exemple un disque dur, ou une mémoire flash.

D'autre part, les supports d'information ou d'enregistrement peuvent être des supports transmissibles tels qu'un signal électrique ou optique, qui peut être acheminé via un câble électrique ou optique, par lien radio, par lien optique sans fil ou par d'autres moyens.

Les programmes selon l'invention peuvent être en particulier téléchargés sur un réseau de type Internet.

Alternativement, chaque support d'informations ou d'enregistrement peut être un circuit intégré dans lequel un programme est incorporé, le circuit étant adapté pour exécuter ou pour être utilisé dans l'exécution du procédé d'obtention conforme à l'invention ou du procédé de traitement conforme à l'invention.

Selon un autre aspect, l'invention vise un système de communication comprenant :
- au moins un dispositif client selon l'invention connecté à au moins un réseau IP par l'intermédiaire d'une interface de connexion ; et
- au moins un serveur DNS selon l'invention à utiliser par le dispositif client en association avec ladite interface de connexion.

Dans un mode particulier de réalisation, le serveur DNS est un serveur public distinct d'un serveur DNS dit nominal avec lequel le dispositif client a été configuré par l'opérateur du réseau IP.

Le système de communication selon l'invention bénéficie des mêmes avantages cités précédemment que le procédé d'obtention, le procédé de traitement, le dispositif client et le serveur DNS selon l'invention.

On peut également envisager, dans d'autres modes de réalisation, que le procédé d'obtention, le procédé de traitement, le dispositif client, le serveur DNS et le système de communication selon l'invention présentent en combinaison tout ou partie des caractéristiques précitées.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
[Fig. 1] la figure 1, déjà décrite, représente dans son environnement, un système de communication de l'état de la technique dans lequel une fonction NAT64 est mise en œuvre entre un réseau IPv6-only et un réseau IPv4-only ;
[Fig. 2] la figure 2 représente dans son environnement, un système de communication conforme à l'invention, dans un mode particulier de réalisation, ce système comprenant un dispositif client et un serveur DNS conformes à l'invention ;
[Fig. 3] la figure 3 illustre de manière schématique l'architecture matérielle du dispositif client de la figure 2 ;
[Fig. 4] la figure 4 illustre de manière schématique l'architecture matérielle du serveur DNS de la figure 2 ;
[Fig. 5] la figure 5 représente, sous forme d'ordinogramme, les principales étapes d'un procédé d'obtention selon l'invention telles qu'elles sont mises en œuvre par le dispositif client de la figure 2 ;
[Fig. 6] la figure 6 représente un premier format possible pour l'information insérée conformément à l'invention dans ses requêtes DNS par le dispositif client de la figure 2 ;
[Fig. 7] la figure 7 représente un deuxième format possible pour l'information insérée conformément à l'invention dans ses requêtes DNS par le dispositif client de la figure 2 ;
[Fig. 8] la figure 8 représente, sous forme d'ordinogramme, les principales étapes d'un procédé de traitement selon l'invention telles qu'elles sont mises en œuvre par le serveur DNS de la figure 2 ;
[Fig. 9] la figure 9 illustre les conséquences sur la qualité d'expérience d'une communication entre un dispositif client et une ressource réseau de l'utilisation d'une adresse IPv6 pour la ressource réseau renvoyée par le serveur DNS et ne correspondant pas à l'interface de connexion réseau pour laquelle elle a été générée ; et
[Fig. 10] la figure 10 illustre un autre exemple de conséquences sur la qualité d'expérience d'une communication entre un dispositif client et une ressource réseau de l'utilisation d'une adresse IPv6 pour la ressource réseau renvoyée par le serveur DNS et ne correspondant pas à l'interface de connexion réseau pour laquelle elle a été générée.

### Description de l'invention

La figure 2 représente, dans son environnement, un système de communication 1 conforme à l'invention, dans un mode particulier de réalisation.

Le système de communication 1 comprend au moins un dispositif client T, conforme à l'invention. Dans l'exemple envisagé ici, le dispositif client T est un terminal d'un utilisateur, tel que par exemple un téléphone intelligent ou smartphone, une tablette numérique, un ordinateur portable, etc. On note qu'aucune limitation n'est attachée à la nature du dispositif client T. II peut s'agir en variante d'un routeur ou CPE (pour « Customer Premises Equipment ») raccordé à un réseau local, d'une clé USB ou d'un dongle attaché à un équipement utilisateur, etc.

Conformément à l'invention, le dispositif client T possède au moins une interface de connexion active par l'intermédiaire de laquelle il est connecté à au moins un réseau lui fournissant un service de connectivité IP (désigné par souci de simplification dans la suite par « réseau IP »). Dans l'exemple de la figure 2, le dispositif client T a deux interfaces de connexion actives I1 et I2, via lesquelles il est connecté respectivement au réseau IP NW1 et au réseau IP NW2. Les réseaux NW1 et NW2 fournissent tous les deux au dispositif client T des services IP et en particulier une connectivité IP permettant au dispositif client T de se connecter au réseau public Internet. Aucune limitation n'est attachée à la nature des services IP fournis par les réseaux NW1 et NW2 au dispositif client (connectivité IP, service de voix sur IP, etc.), ni à la nature des réseaux NW1 et NW2. Il peut s'agir de réseaux fixes ou mobiles, comme par exemple des réseaux 3G, 4G ou 5G, conformes à l'une quelconque des versions du standard 3GPP (Release 15, 16, et suivantes), des réseaux WLAN (Wireless Local Access Network), etc.

Comme mentionné précédemment, l'invention permet de faciliter la migration des réseaux IP pour qu'ils supportent les communications établies selon le protocole IPv6. Par souci de simplification, on suppose ici que les réseaux NW1 et NW2 fournissent au dispositif client T uniquement une connectivité IPv6. En d'autres termes, les réseaux NW1 et NW2 sont supposés ici IPv6-only. En variante, une autre configuration des réseaux NW1 et NW2 pourrait être envisagée, comme par exemple une configuration double-pile IPv4-IPv6. En outre, par souci de simplification, on suppose également que le dispositif client T est IPv6-only, autrement dit, il ne dispose que d'une connectivité IPv6 et ne dispose pas de connectivité IPv4.

Dans l'exemple de la figure 2, les réseaux NW1 et NW2 hébergent chacun un serveur DNS permettant la résolution de noms de domaine, référencé respectivement par DNS# 11 pour le réseau NW1 et DNS#21 pour le réseau NW2, et conforme à l'invention. Ces serveurs DNS sont qualifiés de « nominaux » dans la suite de la description, dans le sens où il s'agit de serveurs DNS fournis par les réseaux NW1 et NW2 et avec lesquels les opérateurs de ces réseaux ont configuré initialement le dispositif client T pour lui permettre d'accéder à des ressources réseau S via leurs réseaux, telles que par exemple un serveur distant. Aucune limitation n'est associée à la nature des ressources réseau auxquelles le dispositif client souhaite accéder (serveur, terminal, application, etc.). On suppose ici que le serveur distant S est connecté au réseau Internet par l'intermédiaire d'un réseau IP NW3. Le réseau IP NW3 peut être IPv6-only, IPv4-only ou double-pile IPv4-IPv6.

Cette configuration a été réalisée par les opérateurs des réseaux NW1 et NW2, par exemple lors de l'attachement du dispositif client T aux réseaux NW1 et NW2, ou lors d'une étape préalable (par exemple dans le cadre d'une configuration « usine »). Elle peut être réalisée de façon connue en soi par les opérateurs des réseaux NW1 et NW2 en utilisant le protocole PCO (Protocol Configuration Option) pour les réseaux 3GPP, ou des options du protocole DHCPv6 (Dynamic Host Configuration Protocol for IPv6) pour les réseaux fixes.

Lors de cette configuration, l'opérateur du réseau NW1, respectivement du réseau NW2, a fourni au dispositif client T une information d'accessibilité du serveur DNS nominal DNS#11 (c'est-à-dire une information permettant d'accéder au serveur DNS# 11), respectivement au serveur DNS nominal DNS# 21. Une telle information d'accessibilité peut être une adresse IP du serveur DNS nominal. Il résulte de cette configuration que lorsque le dispositif client T souhaite accéder à une ressource réseau (par exemple au serveur S) via le réseau NW1, respectivement NW2, il utilise son interface de connexion I1, respectivement I2, pour envoyer une requête DNS au serveur DNS nominal DNS# 11, respectivement DNS#21, en utilisant l'information d'accessibilité qui lui a été communiquée pour accéder à ce serveur DNS nominal. Le dispositif client contacte ainsi le serveur DNS afin d'obtenir une adresse IP lui permettant d'accéder à cette ressource réseau.

Le tableau 1 ci-dessous fournit à titre illustratif un extrait d'une configuration DNS reflétant les informations reçues d'un réseau 3GPP par un dispositif client tel que le dispositif client T en utilisant le protocole PCO.

**[Tableau 1]**

| | | |
|---|---|---|
| ... | | |
| Access Point Name | | |
| | Length: 4 | |
| | APN: myipv6onlyapn | |
| PDN address | | |
| | Length: 9 | |
| | 0000 0... = Spare bit(s): 0x00 | |
| | PDN type: IPv6 (2) | |
| | PDN IPv6 if id: 0000000000000011 | |
| ESM cause | | |
| | Element ID: 0x58 | |
| | Cause: PDN type IPv6 only allowed (51) | |
| Protocol Configuration Options | | |
| | ... | |
| | Protocol or Container ID: DNS Server IPv6 Address (0x0003) | |
| | | Length: 0x10 (16) |
| | | IPv6: 2001:db8::1 |

Les informations fournies par le réseau 3GPP reportées dans le tableau 1 indiquent au dispositif client T que seule une connectivité IPv6 est supportée par le réseau (ESM cause 51 « PDN type IPv6 only allowed »), et qu'un serveur DNS est fourni par le réseau dont l'adresse IPv6 est « 2001:db8::1 ».

Le dispositif client T récupère les informations de configuration DNS nominales associées à chacune de ses interfaces de connexion actives (autrement dit pour chaque réseau IP auquel il est connecté via une interface de connexion), en l'occurrence son interface de connexion I1 au réseau NW1 et son interface de connexion I2 au réseau NW2. Il mémorise les informations récupérées dans un fichier de configuration local appelé CONFIG-DNS. On note qu'un même serveur DNS nominal peut être défini pour des interfaces de connexion à des réseaux IP distincts. Dans le mode de réalisation décrit ici, chaque serveur DNS nominal (c'est-à-dire choisi par l'opérateur du réseau IP pour ses usagers) est associé dans le fichier de configuration local CONFIG-DNS à un paramètre appelé ici NOMINAL-RESOLVER, et valorisé à 1 pour indiquer qu'il s'agit d'un serveur DNS nominal. Chaque serveur DNS nominal est également associé à un paramètre appelé ici NETWORK-ID permettant de relier de manière non ambiguë ce serveur DNS nominal au réseau IP via lequel ledit serveur DNS a été configuré, ou de manière équivalente à l'interface de connexion utilisée par le dispositif client T pour accéder au réseau IP. La structure du paramètre NETWORK-ID est locale à chaque dispositif client. A titre d'exemple, le paramètre NETWORK-ID peut être valorisé avec un identifiant de l'interface de connexion utilisée pour se connecter au réseau IP supportant le serveur DNS nominal (et l'hébergeant ici) ou un identifiant du réseau IP supportant le serveur DNS nominal. Dans l'exemple envisagé ici, à titre illustratif, le paramètre NETWORK-ID est valorisé à NW1 pour le serveur DNS# 11 et à NW2 pour le serveur DNS# 21.

On note que la liste des serveurs DNS nominaux maintenue dans le fichier de configuration local CONFIG-DNS peut être amenée à subir des modifications à l'initiative des réseaux IP auxquels le dispositif client T est connecté et être mise à jour en fonction des consignes reçues de ces réseaux IP. Ce peut être le cas notamment lorsque l'un des réseaux IP auxquels le dispositif client T est connecté souhaite que le dispositif client T utilise pour résoudre ses requêtes DNS un nouveau serveur DNS nominal (par exemple pour le réseau IP NW1 un serveur DNS# 12 au lieu du serveur DNS# 11), ou en cas d'itinérance du dispositif client T (« handover ») entre plusieurs réseaux IP. Dans ce cas, le dispositif client T remplace dans le fichier de configuration local CONFIG-DNS, le serveur DNS nominal désormais obsolète par le nouveau serveur nominal fourni par son opérateur.

Dans l'exemple envisagé ici, le système de communication 1 comprend en outre un serveur DNS alternatif, référencé par DNS# 2, conforme à l'invention (aussi plus communément désigné par serveur DNS public) et localisé dans le réseau public Internet. On suppose que ce serveur DNS alternatif peut être utilisé indépendamment de l'interface de connexion sélectionnée par le dispositif client T pour l'acheminement de ses requêtes DNS. Par serveur DNS alternatif, on entend ici qu'il n'est pas hébergé par les réseaux NW1 et NW2 mais par un réseau tiers. Un tel serveur DNS est alors qualifié de public. Les serveurs Google Public DNS, Coudflare ou encore QUAD9 sont des exemples de tels serveurs DNS publics.

On suppose ici que le dispositif client T est pourvu d'un module applicatif qui permet à son utilisateur, manuellement ou via une application de confiance, de configurer l'utilisation d'un (ou de plusieurs) serveur DNS alternatif tel que décrit ci-avant en remplacement des serveurs DNS nominaux fournis au dispositif client T par les opérateurs des réseaux auxquels il est connecté. Dans l'exemple envisagé, le dispositif client T est ainsi configuré avec le serveur DNS alternatif public DNS#2 ; on suppose ici que le serveur DNS#2 est utilisable quelle que soit l'interface de connexion utilisée par le dispositif client T (c'est-à-dire son interface de connexion I1 au réseau NW1 ou son interface de connexion I2 au réseau NW2), et que le dispositif client T est configuré pour utiliser ce serveur DNS alternatif DNS#2 en remplacement des serveurs DNS# 11 et DNS#21. Autrement dit, le dispositif client T est configuré via le module applicatif pour adresser dès lors ses requêtes DNS au serveur DNS public DNS#2 lorsqu'il souhaite accéder à une ressource réseau (par exemple au serveur S) en utilisant son interface de connexion I1 ou son interface de connexion I2.

En variante, un serveur DNS alternatif différent peut être utilisé pour chaque interface de connexion active du dispositif client T.

Comme pour les serveurs DNS nominaux, la configuration du dispositif client T avec le serveur alternatif DNS#2 consiste notamment à mémoriser au niveau du dispositif client T une information d'accessibilité du serveur DNS alternatif DNS#2, par exemple son adresse IP. Cette configuration est mémorisée ici dans le fichier de configuration local CONFIG-DNS du dispositif client T. Dans le mode de réalisation décrit ici, bien que le serveur DNS alternatif soit destiné à être utilisé en remplacement des serveurs DNS nominaux DNS# 11 et DNS#21, on garde dans le fichier de configuration les informations d'accessibilité des serveurs DNS nominaux.

Pour distinguer dans le fichier de configuration CONFIG-DNS le serveur DNS alternatif DNS#2 utilisé par le dispositif client T pour résoudre ses requêtes DNS des serveurs DNS nominaux DNS# 11 et DNS# 21 initialement fournis par les opérateurs des réseaux NW1 et NW2, le serveur alternatif DNS# 2 est associé à un paramètre NOMINAL-RESOLVER valorisé à 0.

En outre, le serveur DNS#2 pouvant être utilisé par le dispositif client T indépendamment de l'interface de connexion active employée par ce dernier (c'est-à-dire I1 ou I2), aucun paramètre NETWORK-ID n'est associé au serveur DNS#2 dans le fichier de configuration CONFIG-DNS.

En variante, le serveur DNS#2 peut être associé à un paramètre NETWORK-ID valorisé à NW1 et NW2. Si un serveur DNS alternatif distinct est utilisé pour chaque interface de connexion active, on associe à chaque serveur DNS alternatif un paramètre NETWORK-ID identifiant l'interface de connexion utilisée par le dispositif client T pour accéder à ce serveur DNS alternatif.

Le tableau 2 ci-dessous illustre un extrait du fichier de configuration CONFIG-DNS.

**[Tableau 2]**

| | | |
|---|---|---|
| DNS# 11 | NOMINAL-RESOLVER= 1 | NETWORK-ID= NW1 |
| DNS# 21 | NOMINAL-RESOLVER= 1 | NETWORK-ID= NW2 |
| DNS# 2 | NOMINAL-RESOLVER= 0 | |

On note que le paramètre NETWORK-ID peut être omis également lorsque le dispositif client T est mono-interface, c'est-à-dire qu'il dispose d'une unique interface de connexion active et n'est connecté qu'à un unique réseau IP. Dans ce cas, l'absence du paramètre NETWORK-ID pour le serveur DNS nominal (c'est-à-dire pour le serveur DNS associé à un paramètre NOMINAL-RESOLVER= 1) indique qu'il s'agit du serveur DNS nominal fourni ou hébergé par l'opérateur du réseau associé à cette unique interface de connexion.

En variante, des fichiers distincts peuvent être utilisés pour mémoriser d'une part les serveurs DNS nominaux fournis par les opérateurs, et d'autre part, les serveurs DNS alternatifs.

Par ailleurs, dans le mode de réalisation décrit ici, seuls les serveurs du fichier de configuration CONFIG-DNS associés à un paramètre NOMINAL-RESOLVER valorisé à 0 sont utilisés par le dispositif client T pour résoudre ses requêtes DNS. Les autre serveurs associés à un paramètre NOMINAL-RESOLVER valorisé à 1 sont utilisés ici pour découvrir les réseaux IP NW1 et NW2 qui mettent en œuvre une fonction NAT64, et le cas échéant le ou les préfixes IPv6 utilisés par cette fonction. On note que si aucun serveur DNS alternatif n'est associé à une interface de connexion, le dispositif client T est configuré pour utiliser par défaut le serveur DNS nominal fourni par l'opérateur du réseau associé à cette interface de connexion.

Dans le mode de réalisation décrit ici, le dispositif client T a l'architecture matérielle d'un ordinateur, telle qu'illustrée schématiquement à la **figure 3**. Il comprend notamment un processeur 2, une mémoire vive 3, une mémoire morte 4, une mémoire flash non volatile 5 dans laquelle est stockée par exemple le fichier de configuration locale CONFIG-DNS, ainsi que des moyens de communication 6 comprenant en particulier les interfaces de connexion I1 et I2 et une pile protocolaire IPv6.

La mémoire morte 4 est un support d'enregistrement conforme à l'invention, lisible par le processeur 2 du dispositif client T, et sur lequel est enregistré un programme d'ordinateur PROG1 selon l'invention, qui comporte des instructions pour la mise en œuvre d'un procédé d'obtention selon l'invention. Autrement dit, le programme d'ordinateur PROG1 définit différents modules fonctionnels du dispositif client T lui permettant de mettre en œuvre le procédé d'obtention selon l'invention. Dans le mode de réalisation décrit ici, ces modules comprennent (cf. figure 2) un module d'insertion M1 configuré pour insérer conformément à l'invention une option spécifique dans les requêtes DNS que le dispositif client T adresse aux serveurs DNS avec lesquels il a été configuré, cette option étant nommée ici PREFIX64 ici et décrite ultérieurement, un module d'envoi M2 configuré pour envoyer ces requêtes DNS aux serveurs DNS concernés, et un module M3 configuré pour déterminer si les réseaux IP avec lesquels il dispose d'une interface de connexion active mettent en œuvre ou non une fonction NAT64 de conversion de paquets IPv4 en paquets IPv6 et inversement. Dans la suite de la description, par souci de simplification, on désigne par fonction de conversion de paquets IPv4 en paquets IPv6 une telle fonction, bien qu'elle soit également en mesure de convertir des paquets IPv6 en paquets IPv4. La conversion des paquets requiert une fonction de traduction d'adresses IPv4 en adresses IPv6.

Les fonctions des modules M1, M2 et M3 sont décrites plus en détail ultérieurement en référence aux étapes du procédé d'obtention selon l'invention.

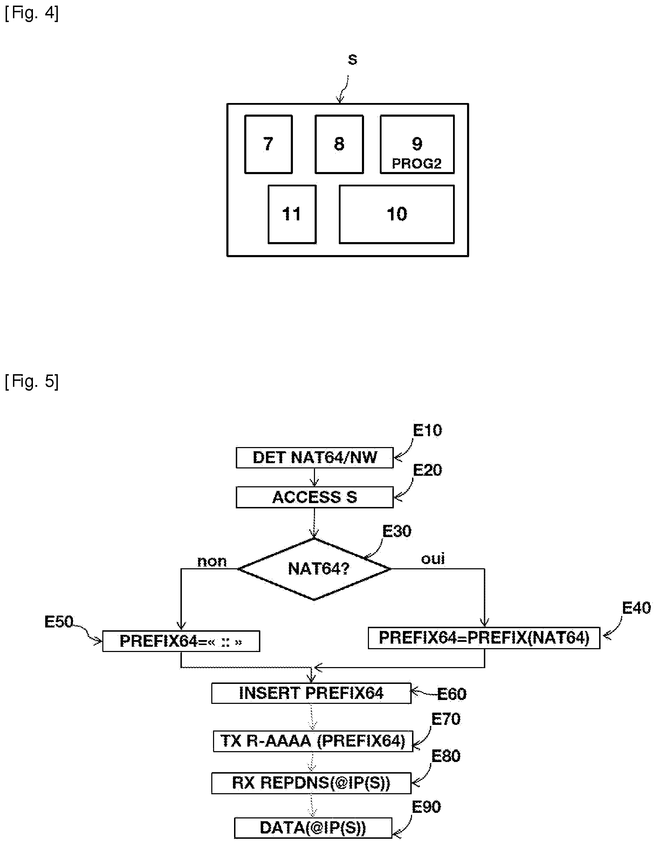

Dans le mode de réalisation décrit ici, les serveurs DNS# 11, DNS#21, DNS#2 conformes à l'invention ont également l'architecture matérielle d'un ordinateur, telle qu'illustrée schématiquement à la **figure 4****.** Chaque serveur DNS comprend un processeur 7, une mémoire vive 8, une mémoire morte 9, une mémoire flash non volatile 10, ainsi que des moyens de communication 11 une ou plusieurs interfaces de connexion suivant le réseau IP dans lequel il est hébergé.

La mémoire morte 9 est un support d'enregistrement conforme à l'invention, lisible par le processeur 7 du serveur, et sur lequel est enregistré un programme d'ordinateur PROG2 selon l'invention, qui comporte des instructions pour la mise en œuvre d'un procédé de traitement selon l'invention. Autrement dit, le programme d'ordinateur PROG2 définit différents modules fonctionnels du serveur DNS lui permettant de mettre en œuvre le procédé de traitement selon l'invention, et plus particulièrement dans le mode de réalisation décrit ici (cf. figure 2), un module de réception M4 apte à recevoir des requêtes DNS en provenance de dispositifs clients conformes à l'invention, un module de détection M5, configuré pour détecter si les requêtes DNS qu'il reçoit contiennent l'option spécifique PREFIX64, un module de résolution M6 des requêtes DNS qu'il reçoit, et un module d'envoi M7 configuré pour élaborer et envoyer aux dispositifs clients qui le sollicitent des réponses à leurs requêtes DNS tenant compte le cas échéant des indications véhiculées par l'option PREFIX64.

Les fonctions des modules M4, M5, M6 et M7 sont décrites plus en détail ultérieurement en référence aux étapes du procédé de traitement selon l'invention.

Nous allons maintenant décrire, en référence aux **figures 5 à 10** les principales étapes du procédé d'obtention et du procédé de traitement mis en œuvre respectivement, dans un mode particulier de réalisation, par le dispositif client T et par le serveur DNS alternatif public DNS#2.

Comme mentionné précédemment, l'invention est particulièrement avantageuse en ce qu'elle permet à un dispositif client IPv6-only (par exemple au dispositif client T) cherchant à accéder à une ressource réseau (par exemple au serveur S), sans savoir au préalable de quelle connectivité bénéficie cette ressource réseau (IPv4-only, IPv6-only, ou IPv4/IPv6) et quelle que soit cette connectivité, d'obtenir une adresse IP pour cette ressource réseau en interrogeant un serveur DNS avec lequel il est configuré au moyen d'une unique requête DNS requérant pour la ressource réseau un enregistrement de type AAAA, autrement dit au moyen d'une requête d'obtention d'une adresse IPv6 pour accéder à cette ressource réseau au sens de l'invention. Conformément à l'invention, cette unique requête de type AAAA lui permet, grâce à l'information qu'elle contient, d'obtenir soit une adresse IPv6 fictive soit une adresse IPv4 lorsque la ressource réseau dispose d'une connectivité IPv4, en fonction des attentes du dispositif client (celles-ci pouvant résulter par exemple de préférences ou de la configuration du dispositif client).On évite ainsi une surcharge des serveurs DNS du système de communication 1 puisque le dispositif client T n'émet qu'un seul type de requête DNS. En outre, de façon très avantageuse, l'invention permet de gérer plusieurs configurations de réseaux IP, et s'applique que ces réseaux mettent en œuvre ou non une fonction de type DNS64. Elle convient également lorsqu'une fonction de traduction d'adresses est disponible au niveau du dispositif client T (par exemple une fonction CLAT).

En référence à la **figure 5**, dans le mode de réalisation décrit ici, le dispositif client T détermine dans un premier temps, via son module M3, si les réseaux IP auxquels il est connecté (NW1 et NW2 dans l'exemple envisagé) et qu'il est susceptible d'utiliser pour accéder à des ressources réseau mettent ou non en œuvre une fonction NAT64 de conversions d'adresses IPv4 en adresses IPv6 (étape E10). Il procède à cette détermination pour chaque réseau IP avec lequel il dispose d'une interface de connexion active. On s'intéresse ici à une fonction NAT64 configurée pour transformer une adresse IPv4 en une adresse « IPv4-embedded IPv6 » (et inversement), en utilisant un préfixe NSP ou un préfixe WKP tels que discutés précédemment. Il convient de noter que dans l'exemple envisagé ici, on s'intéresse plus particulièrement à une adresse de type « IPv4-converted IPv6 » qui est une variante particulière des adresses « IPv4-embedded IPv6 » s'appliquant aux adresses représentant des ressources réseau IPv4 dans un monde IPv6.

A cet effet, le dispositif client T peut procéder de différentes façons.

Ainsi selon une première variante de réalisation, le dispositif client T peut détecter qu'un réseau IP auquel il est connecté met en œuvre (ou active) une fonction NAT64 car le dispositif client T a été configuré préalablement par l'opérateur du réseau IP avec divers éléments utilisés par une telle fonction NAT64, comme typiquement les préfixes NAT64 (c'est-à-dire préfixes IPv6 de type NSP ou WKP) utilisés par la fonction NAT64. Cette configuration du dispositif client T peut être réalisée par l'opérateur du réseau IP via l'annonce explicite par le réseau IP du ou des préfixes NAT64 en utilisant par exemple une option DHCPv6 dédiée, ou une option RA (pour Router Advertisement) telle que décrite dans le document RFC 4861 de I'IETF intitulé « Neighbor Discovery for IP version 6 », septembre 2007, ou encore un objet du protocole PCO. Sur réception d'une telle annonce, le dispositif client T mémorise les préfixes NAT64 dans le fichier de configuration CONFIG-DNS en association avec le réseau IP correspondant (c'est-à-dire correspondant à l'interface de connexion via laquelle il a reçu l'annonce), sous la forme par exemple d'un couple comprenant le paramètre NETWORK-ID et un paramètre appelé PREFIX64.

On note que plusieurs préfixes NAT64 peuvent être configurés au sein d'un même réseau IP. Un même préfixe NAT64 peut par ailleurs être utilisé par plusieurs réseaux IP distincts. Il en résulte que le dispositif client T peut maintenir une ou plusieurs paires { NETWORK-ID, PREFIX64} listant le cas échéant les préfixes NAT64 utilisés par les réseaux IP auxquels il est connecté.

Selon une deuxième variante de réalisation, le dispositif client T découvre de manière automatique la présence de fonctions NAT64 dans les réseaux IP avec lesquels il dispose d'interfaces de connexion actives en sollicitant les serveurs DNS nominaux mémorisés dans le fichier de configuration CONFIG-DNS (c'est-à-dire les serveurs DNS associés dans le fichier à un paramètre NOMINAL-RESOLVER valorisé à 1).

Plus précisément, dans cette deuxième variante, le dispositif client T envoie une requête DNS d'obtention d'une adresse IP correspondant à un enregistrement de type AAAA (aussi plus simplement désignée ici par requête DNS de type AAAA) pour une ressource réseau donnée (désignée par ressource réseau « test » dans la suite) connue pour disposer uniquement d'une connectivité IPv4. Cette ressource réseau « test » est par exemple un serveur connu pour être IPv4-only. A titre illustratif, on considère ici comme ressource réseau test un serveur « test » correspondant à un nom de domaine « monserveur.example » ayant comme adresse IP l'adresse IPv4 « 192.0.2.33 ».

Cette requête DNS de type AAAA constitue une requête d'obtention d'une adresse IPv6 pour la ressource réseau « test » au sens de l'invention. Une telle requête DNS est envoyée par le dispositif client T en utilisant IPv6 vers chaque serveur DNS nominal DNS# 11 et DNS#21.

Si, en réponse à cette requête DNS de type AAAA, le dispositif client T reçoit une réponse positive d'un serveur DNS nominal comprenant une adresse IPv6 pour le serveur « test », cela signifie qu'une fonction DNS64 est activée au niveau de ce serveur DNS nominal et donc que le réseau IP hébergeant ce serveur DNS nominal met en œuvre une fonction NAT64. En outre, l'adresse IPv6 contenue dans la réponse reçue par le dispositif client T a été formée par le serveur DNS nominal pour le serveur test IPv4-only à partir de son adresse IPv4 et du préfixe NAT64 avec lequel le serveur DNS nominal a été configuré, qui coïncide comme souligné précédemment avec le préfixe NAT64 utilisé par la fonction NAT64 mise en œuvre par le réseau IP. Le dispositif client T peut donc extraire de cette adresse IPv6 le préfixe NAT64 en question ; il utilise par exemple à cet effet l'algorithme spécifié dans la section 2.3 du document RFC 6052.

Ainsi, à titre illustratif, si le serveur DNS nominal DNS# 11 retourne une réponse positive comprenant l'adresse IPv6 « 2001:db8:122:3c0:0:221::/128 » pour le serveur « test » « monserveur.example », connaissant l'adresse IPv4 associée au serveur « test » et l'algorithme décrit dans le document RFC 6052, le dispositif client T extrait le préfixe NAT64 correspondant : « 2001:db8:122:300::/56 ». Le dispositif client T sauvegarde alors ce préfixe pour le réseau IP NW1, par exemple sous la forme d'un couple {NETWORK-ID=NW1, PREFIX64= 2001:db8:122:300::/56}.

Le dispositif client T peut également, au lieu de procéder à ce stade à l'extraction du préfixe NAT64, sauvegarder directement l'adresse IPv6 retournée par le serveur DNS# 11 dans le paramètre PREFIX64 et mémoriser le couple {NETWORK-ID=NW1, PREFIX64=2001:db8:122:3c0:0:221::/128}.

Selon une troisième variante de réalisation, le dispositif client T utilise le protocole PCP et notamment le mécanisme décrit dans le document RFC 7225 pour découvrir la présence de fonctions NAT64 dans les réseaux IP avec lesquels il dispose d'interfaces de connexion actives. Ce mécanisme permet au dispositif client T de récupérer la liste des préfixes NAT64 associés à l'interface de connexion qu'il utilise lors de la mise en œuvre du mécanisme. S'il récupère lors de cette mise en œuvre au moins un préfixe NAT64, cela signifie que le réseau IP correspondant à l'interface de connexion utilisée met en œuvre une fonction NAT64.

La procédure de découverte de la présence d'une fonction NAT64 dans un réseau IP mise en œuvre lors de l'étape E10 peut également être exécutée de manière récursive. Une telle exécution récursive présente un intérêt notamment lorsque le dispositif client T est connecté via un équipement intermédiaire au réseau IP comme par exemple un CPE. Dans ce cas, le CPE exécute la procédure de découverte en mettant en œuvre l'une des techniques mentionnées précédemment, puis communique au dispositif client T les préfixes NAT64 découverts lors de cette procédure. Le CPE peut utiliser à cet effet notamment un message d'annonce de type RA tel qu'évoqué précédemment.

Si lors de l'étape E10, le dispositif client T détecte l'activation d'une fonction NAT64 dans l'un des réseaux IP auxquels il est connecté, il associe à ce réseau IP, dans le fichier de configuration CONFIG-DNS, un paramètre appelé NAT64_ENABLED valorisé à 1. Ainsi, dans le fichier de configuration CONFIG-DNS, le paramètre NAT64_ENABLED est valorisé à « 1 » pour les réseaux IPv6-only pour lesquels au moins un préfixe NAT64 a été découvert lors de l'étape E10. Le paramètre NAT64_ENABLED est en revanche valorisé à « 0 » pour les réseaux IPv4-only, pour les réseaux « dual-stack » IPv4/IPv6, et pour les réseaux IPv6-only sans fonction NAT64.

On note que, dans le mode de réalisation décrit ici, le dispositif client T exécute à nouveau la procédure de détection de présence d'une fonction NAT64 qui vient d'être décrite à chaque fois qu'il détecte un changement de la configuration réseau fournie par l'opérateur d'un réseau et qui peut avoir un impact sur les services DNS. Un tel changement de configuration réseau peut avoir lieu notamment, comme mentionné précédemment, lorsque le dispositif client T se trouve en situation d'itinérance. Il peut résulter en une mise à jour du ou des préfixes NAT64 utilisés par la fonction NAT64 mise en œuvre par le réseau le cas échéant ou par le maintien ou au contraire le changement de la valeur du paramètre NAT64_ENABLED selon que le réseau en question met en œuvre ou non une fonction NAT64, ou un changement du serveur DNS nominal associé au réseau, etc.

On suppose maintenant que le dispositif client T souhaite accéder à une ressource réseau S, par exemple au serveur S (étape E20).

A cet effet, de façon connue en soi, il envoie, via l'une de ses interfaces de connexion actives et son module d'envoi M2, une requête DNS de résolution du nom de domaine du serveur RM au serveur DNS associé à cette interface de connexion (étape E70). Dans l'exemple illustratif envisagé ici, le dispositif client T est configuré pour solliciter le serveur alternatif DNS#2 pour résoudre ses requêtes DNS, quelle que soit l'interface de connexion utilisée par le dispositif client T.

Conformément à l'invention, le dispositif client T est configuré pour émettre uniquement à destination du serveur DNS avec lequel il est configuré (serveur DNS# 2 ici), des requêtes DNS de type AAAA, quelle que soit la connectivité (IPv4, IPv6 ou IPv4/IPv6) dont bénéficie la ressource réseau S à laquelle il souhaite accéder, autrement dit, uniquement des requêtes DNS d'obtention d'une adresse IPv6 pour accéder à cette ressource réseau. Cette requête DNS, notée R-AAAA, contient de façon classique (conformément à ce qui est décrit dans le document IETF RFC1035), le nom de domaine associé à la ressource réseau S qu'il cherche à résoudre ainsi que le type d'enregistrement souhaité, c'est-à-dire AAAA.

Pour gérer notamment les cas de figure où la ressource réseau S n'est pas associée à un enregistrement de type AAAA car elle ne dispose que d'une connectivité IPv4 (et donc que d'une adresse IPv4), l'invention prévoit avantageusement l'insertion d'une information additionnelle dans la requête R-AAAA par le module d'insertion M1 du dispositif client T avant son envoi vers le serveur DNS# 2 (étape E60). Cette information est insérée, dans le mode de réalisation décrit ici, dans une option de l'extension EDNS(0) du protocole DNS introduite à cet effet, que l'on nomme dans cette description PREFIX64. Elle est représentative du type d'adresse IP attendu par le dispositif client T du serveur DNS#2, en réponse à la requête R-AAAA, si la ressource réseau S visée par cette requête dispose d'une connectivité IPv4. Ce type d'adresse IP attendu par le dispositif client T peut être soit une adresse IPv6 fictive, formée par le serveur DNS par exemple, soit une adresse IPv4 comme détaillé ci-après.

Dans le mode de réalisation décrit ici, l'option PREFIX64 est définie (et reconnue en tant que telle par le serveur DNS recevant la requête DNS contenant cette option) de sorte qu'elle est représentative du type d'adresse IP attendu par le dispositif client du serveur DNS qu'il interroge avec une requête R-AAAA contenant cette option, dans la réponse du serveur DNS à la requête R-AAAA, si la ressource réseau S visée par cette requête dispose uniquement d'une connectivité IPv4. Autrement dit, le serveur DNS détectant l'option PREFIX64 dans la requête DNS qui lui est adressée n'est pas tenu d'appliquer le type d'adresse IP défini par cette dernière si la ressource réseau dispose d'une double connectivité IPv4 et IPv6.

Dans un autre mode de réalisation, on peut veiller à définir l'option PREFIX64 (et donc faire en sorte qu'elle soit reconnue en tant que telle par le serveur DNS recevant la requête DNS contenant cette option) de sorte qu'elle soit représentative du type d'adresse IP attendu par le dispositif client du serveur DNS interrogé en réponse à sa requête R-AAAA, dès lors que la ressource réseau visée par cette requête dispose d'une connectivité IPv4. Autrement dit, le serveur DNS interrogé est tenu d'appliquer le type d'adresse IP défini par l'option PREFIX64 si la ressource réseau dispose d'une connectivité IPv4, et ce même si elle dispose d'une double connectivité IPv4 et IPv6.

Différents cas de figure peuvent se présenter et impacter la valeur de l'information insérée par le dispositif client T dans l'option PREFIX64 de la requête DNS.

Plus précisément, si l'interface de connexion que le dispositif client T envisage d'utiliser pour accéder à la ressource réseau S est associée à un paramètre NAT64-ENABLED valorisé à 1 et à au moins un préfixe NAT64 (réponse « oui » à l'étape test E30), le dispositif client T renseigne l'option PREFIX64 avec la valeur du préfixe NAT64 ou de l'adresse IPv6 associée à l'interface de connexion et déterminée lors de l'étape E10 (et mémorisée dans l'un des couples (NETWORK-ID, PREFIX64) maintenus par le dispositif client T et associé à l'interface de connexion en question) (étape E40). En renseignant de la sorte l'option PREFIX64 de la requête R-AAAA, le dispositif client T indique au serveur DNS# 2 que si la ressource réseau S dispose d'une connectivité IPv4, et que par conséquent la résolution du nom de domaine associé à cette ressource réseau S résulte en l'obtention d'une adresse IPv4, le dispositif client T souhaite recevoir de la part du serveur DNS# 2 une adresse IPv6 formée par ce dernier à partir de l'adresse IPv4 de la ressource réseau S et du préfixe NAT64 renseigné dans l'option PREFIX64, ou si cette option contient une adresse IPv6, du préfixe NAT64 extrait de cette adresse IPv6, par exemple en utilisant l'algorithme décrit dans le document RFC 6052 évoqué précédemment.

Si au contraire (réponse « non » à l'étape test E30), l'interface de connexion que le dispositif client T envisage d'utiliser pour accéder à la ressource réseau S est associée à un paramètre NAT64-ENABLED valorisé à 0, le dispositif client T positionne dans l'option PREFIX64 de la requête R-AAAA une valeur prédéfinie, à savoir ici la valeur nulle «::ffff:0:0» (étape E50). Cette valeur nulle indique au serveur DNS# 2 que l'adresse IP attendue en réponse à la requête R-AAAA est une adresse IPv4, en l'occurrence l'adresse IPv4 de la ressource S. L'exemple donné de valeur nulle est fourni à titre illustratif uniquement : en variante, on peut envisager une autre valeur prédéfinie pour indiquer au serveur DNS# 2 que l'adresse IPv4 de la ressource S est attendue en réponse à la requête R-AAAA, dès lors que cette valeur prédéfinie est reconnue comme ayant cette signification par le serveur DNS# 2.

On note qu'avantageusement, le dispositif client T peut également insérer une valeur nulle (ou de manière plus générale une valeur prédéfinie) dans l'option PREFIX64 si, bien qu'il ait déterminé que l'interface de connexion qu'il envisage d'utiliser permet d'accéder à un réseau qui met en œuvre une fonction NAT64, il souhaite former lui-même une adresse IPv6 à partir de l'adresse IPv4 de la ressource S (il est par exemple équipé à cet effet d'une fonction CLAT décrite précédemment), et ne souhaite pas solliciter le serveur DNS# 2 pour former cette adresse, ou si il est informé que le serveur DNS# 2 ne met pas en œuvre de fonction DNS64.

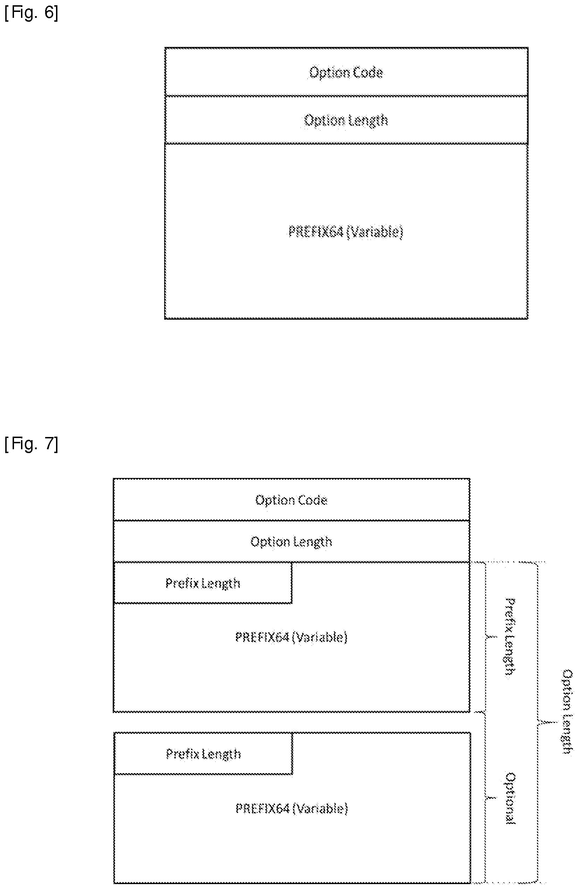

La **figure 6** illustre un premier format pouvant être envisagé pour l'option PREFIX64 insérée par le dispositif client dans la requête R-AAAA.

Ce format comprend trois champs :
- un champ « Option Code » incluant un code identifiant l'option PREFIX64 ;
- un champ « Option Length » indiquant, en octets, la taille des données incluses dans l'option PREFIX64. Dans le mode de réalisation décrit ici, une taille des données égale à 16 a une signification particulière : cela signifie que le champ PREFIX64 contient une adresse IPv6 et non un préfixe NAT64 ; et
- un champ PREFIX64 contenant l'information représentative du type d'adresse IP attendu par le dispositif client. Dans le mode de réalisation décrit ici, le champ PREFIX64 peut contenir un préfixe NAT64, une adresse IPv6 ou la valeur nulle (c'est-à-dire la valeur «::ffff:0:0»).

La **figure 7** représente un deuxième format pouvant être envisagé pour l'option PREFIX64, et permettant d'inclure un ou plusieurs préfixes NAT64 (ou adresses IP à partir desquelles extraire des préfixes NAT64). La taille de chaque préfixe est régie par le champ « Prefix Length » ; si ce champ est valorisé à 16 cela signifie que le champ PREFIX64 associé contient une adresse IPv6 et non un préfixe. Le champ « Option Length » correspond à la somme des longueurs des différents préfixes fournis dans l'option PREFIX64.

Bien entendu ces exemples de formats ne sont donnés qu'à titre illustratif et d'autres informations peuvent être incluses dans l'option PREFIX64.

On note que lorsque la valeur du champ PREFIX64 inclut un préfixe NAT64 ou une adresse IPv6 permettant d'extraire un tel préfixe NAT64, il doit s'agir du préfixe NAT64 utilisé le cas échéant par le réseau IP associé à l'interface de connexion que le dispositif client T envisage d'utiliser pour accéder à la ressource réseau S (c'est-à-dire pour lui envoyer et/ou recevoir des données de cette ressource réseau). Si le dispositif client T envisage d'utiliser toutes ses interfaces de connexion actives et que des préfixes NAT64 distincts ont été découverts pour ces différentes interfaces de connexion lors de l'étape E10, le dispositif client T inclut plusieurs options PREFIX64 dans la requête R-AAAA qui contiennent chacune un préfixe NAT64, par exemple en utilisant le format d'option proposé à la figure 7. Dans une variante de réalisation, le dispositif client T peut envoyer plusieurs requêtes DNS au serveur DNS# 2 contenant chacune une option PREFIX64 identifiant un préfixe NAT64 distinct.

On note en outre qu'un dispositif client T qui dispose de plusieurs interfaces de connexion actives, autrement dit un dispositif client multi-interfaces, peut choisir n'importe laquelle de ses interfaces de connexion actives pour l'envoi d'une requête AAAA transportant une option PREFIX64. Par exemple, le terminal peut envoyer la requête AAAA via le même réseau qui supporte le service NAT64 associé au(x) préfixe(s) NAT64 inclus dans la requête AAAA ou via un réseau différent.

Après avoir inséré l'option PREFIX64 dans la requête DNS R-AAAA, le dispositif client T envoie la requête R-AAAA au serveur DNS# 2 via l'une de ses interfaces de connexion actives (étape E70).

Dans un autre mode de réalisation, l'option PREFIX64 est définie pour être représentative de manière générale du type d'adresse IP attendu par le dispositif client du serveur DNS en réponse à sa requête R-AAAA dès lors que la ressource réseau dispose au moins d'une connectivité IPv4, et le dispositif client T insère dans sa requête DNS R-AAAA, en plus de l'option PREFIX64 et avant de l'envoyer au serveur DNS#2, une instruction additionnelle visant à indiquer au serveur DNS# 2, lorsque l'option PREFIX64 contient un préfixe IPv6 ou une adresse IPv6 comprenant un tel préfixe, s'il doit générer une adresse selon le format IPv6 à partir de ce préfixe et de l'adresse IPv4 de la ressource seulement si la ressource réseau dispose uniquement d'une connectivité IPv4, ou si la ressource réseau dispose d'une connectivité IPv4 indépendamment du fait qu'elle dispose ou non également d'une connectivité IPv6. Cette instruction peut être comprise dans un paramètre optionnel de la requête DNS R-AAAA (par exemple dans un champ de l'option PREFIX64 représentée à titre illustratif sur les figures 6 et 7, que l'on peut nommer « Scheme ID »), destiné à communiquer au serveur DNS des indications relatives à la méthode que doit appliquer le serveur DNS pour former des adresses IPv6 « fictives » à partir des adresses IPv4 des ressources réseau pour lesquelles il est interrogé. Si l'on désigne par « Scheme ID » ce paramètre optionnel, on peut par exemple définir les valeurs suivantes pour ce paramètre :
- la valeur 0 indique que le serveur DNS doit générer les adresses IPv6 fictives seulement si la ressource réseau dispose d'une connectivité IPv4 uniquement ; et
- la valeur 1 indique que le serveur DNS doit générer les adresses IPv6 fictives si la ressource réseau dispose d'une connectivité IPv4, même si elle dispose également d'une connectivité IPv6.

On note que d'autres valeurs peuvent être définies pour le paramètre Scheme ID pour transmettre au serveur DNS d'autres types d'instructions concernant la méthode de formation des adresses IPv6 fictives. Ainsi à titre illustratif :
- la valeur 2 peut indiquer que le serveur DNS doit utiliser pour former des adresses IPv6 fictives à partir d'adresses IPv4 et selon l'algorithme défini en section 2.3 du document RFC 6052 ;
- la valeur 3 peut indiquer que le serveur DNS doit utiliser le préfixe WKP pour former des adresses IPv6 fictives à partir d'adresses IPv4;
- la valeur 4 peut indiquer que le serveur DNS doit utiliser un suffixe qui garantit la neutralité du « checksum » (mécanisme de contrôle d'intégrité) du pseudo entête de la couche transport ; et
- la valeur 5 peut indiquer que le serveur DNS doit retourner des adresses IPv4 associées à la ressource cible dans la section additionnelle.

Ces exemples ne sont donnés qu'à titre illustratif et on peut envisager que le dispositif client transmette au serveur DNS d'autres instructions par l'intermédiaire d'autres valeurs du paramètre « Scheme ID ». En variante, d'autres instructions peuvent être transmises par le dispositif client au serveur DNS par l'intermédiaire d'autres supports, comme par exemple d'autres paramètres de la requête R-AAAA.

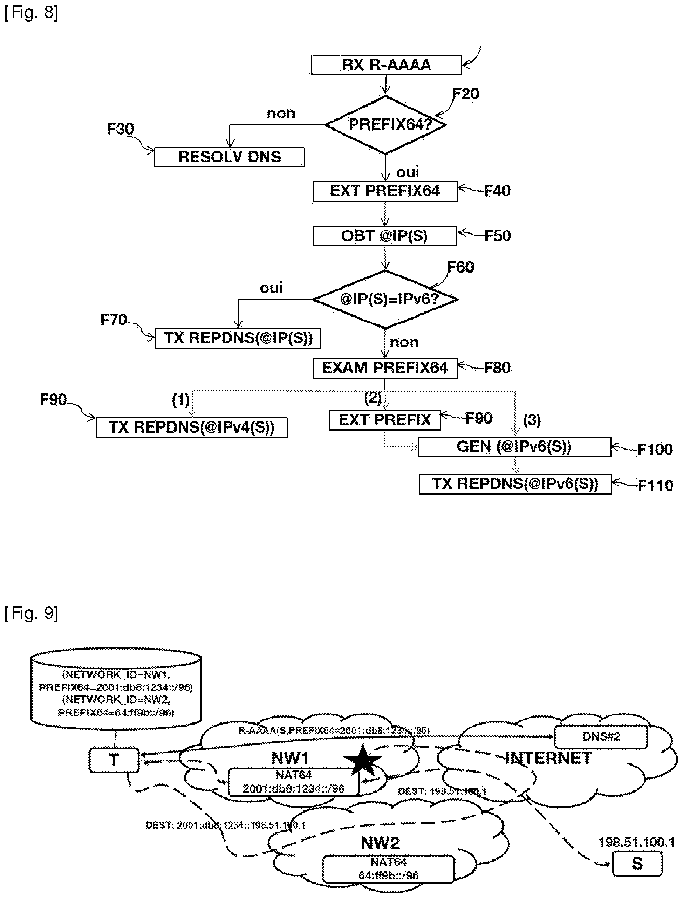

Nous allons maintenant décrire, en référence à la **figure 8**, comment les requêtes DNS de type AAAA émises par le dispositif client T, et notamment la requête R-AAAA, sont traitées par le serveur DNS# 2, ou plus généralement par les serveurs DNS conformes à l'invention.

Sur réception d'une requête DNS de type AAAA via son module de réception M4 (étape F10), le serveur DNS# 22 vérifie, au moyen de son module de détection M5, si cette requête contient une option PREFIX64 (étape test F20).

Si le module de détection M5 ne détecte pas d'option PREFIX64 (réponse « non » à l'étape test F20), il traite et résout la requête DNS de type AAAA reçue de façon conventionnelle, comme dans l'état de la technique (étape F30). Le mécanisme mis en œuvre pour cette résolution est par exemple décrit dans les documents RFC 1034 et RFC 1035 de l'IETF, intitulés respectivement « Domain names - concept and facilities » et « Domain names - implementation and specification », novembre 1987.

Plus spécifiquement, le serveur DNS# 22 détermine, au moyen de son module M6, l'adresse IPv6 de la ressource réseau S. On note dans la suite @IP(S) cette adresse IP.

Si le serveur DNS# 2 est le serveur DNS autoritaire pour la ressource S, et si la ressource S dispose d'une connectivité IPv6, le serveur DNS# 2 dispose localement de l'adresse IPv6 de la ressource S, et répond au dispositif client T positivement en lui transmettant cette adresse IPv6. S'il ne s'agit pas du serveur DNS autoritaire pour la ressource S mais d'un serveur DNS récursif, le serveur DNS# 2 émet à destination du serveur DNS autoritaire (ou d'un autre serveur DNS récursif) une requête DNS de type AAAA visant à obtenir l'adresse IPv6 de la ressource S. Si la ressource S dispose d'une connectivité IPv6, une réponse positive est retournée au serveur DNS# 2 contenant l'adresse IPv6 de la ressource S. Le serveur DNS# 2 répond alors positivement au dispositif client T en lui transmettant cette adresse IPv6 dans sa réponse à la requête R-AAAA. Sinon une réponse négative est retournée au serveur DNS#2 qui à son tour, répond négativement à la requête DNS AAAA reçue du dispositif client T.

Dans l'exemple envisagé ici, le serveur DNS# 2 reçoit lors de l'étape F10 la requête R-AAAA concernant la ressource réseau S, et dans laquelle le dispositif client T a inséré une option PREFIX64 représentative du type d'adresse IP qu'il attend en réponse à sa requête DNS si la ressource réseau S dispose d'une connectivité IPv4 (et uniquement d'une telle connectivité dans le mode de réalisation décrit ici). Le module de détection M5 détecte lors de l'étape F20 la présence de l'option PREFIX64 insérée par le dispositif client T dans la requête R-AAAA (réponse « oui » à l'étape test F20).

Il extrait la valeur renseignée par le dispositif client T dans le champ PREFIX64 de l'option détectée (étape F40).

Puis il détermine, au moyen de son module d'obtention M6, l'adresse IP @IP(S) de la ressource réseau S (étape F50). Comme décrit précédemment pour l'étape F30, si le serveur DNS# 2 est le serveur autoritaire pour la ressource S, il dispose localement de l'adresse IP ou des adresses IP de cette dernière qu'il s'agisse d'adresse(s) IPv4 ou d'adresse(s) IPv6 ou des deux types d'adresses. Sinon, il obtient l'adresse IP de la ressource S récursivement en interrogeant le serveur DNS autoritaire de la ressource S.

Plus précisément, il émet à destination du serveur DNS autoritaire (directement ou via un serveur DNS récursif intermédiaire) une requête DNS de type AAAA visant à obtenir une adresse IPv6 pour la ressource S. Si la ressource S dispose d'une connectivité IPv6, une réponse positive est alors retournée par le serveur DNS autoritaire au serveur DNS# 2 contenant l'adresse IPv6 de la ressource S notée @IPv6(S).

Sinon une réponse négative est retournée au serveur DNS# 2. Dans ce cas, dans le mode de réalisation décrit ici, le serveur DNS# 2 émet à destination du serveur DNS autoritaire (ou d'un autre serveur DNS récursif intermédiaire) une requête DNS de type A visant à obtenir l'adresse IPv4 de la ressource S. Il reçoit alors une réponse positive du serveur DNS autoritaire contenant l'adresse IPv4 de la ressource S notée @IPv4(S).

On note que le serveur DNS# 2 peut en variante émettre les deux requêtes DNS de type A et AAAA simultanément vers le serveur DNS autoritaire pour anticiper en particulier le non support de la connectivité IPv6 par la ressource réseau S. La réponse à la requête de type A n'est alors utilisée par le serveur DNS# 2 que si la réponse à la requête de type AAAA est négative.

Dans une autre variante encore, si l'option PREFIX64 est définie de sorte qu'elle soit prise en compte y compris lorsque la ressource réseau S dispose d'une double connectivité ou lorsque la requête DNS R-AAAA comprend une instruction en ce sens (par exemple un paramètre Scheme ID tel que mentionné précédemment, valorisé à 1), le serveur DNS# 2 peut émettre les deux requêtes DNS de type A et AAAA simultanément ou séquentiellement vers le serveur DNS autoritaire pour déterminer si la ressource S dispose d'une double connectivité IPv4 et IPv6.

Si l'adresse @IP(S) ainsi déterminée par le serveur DNS# 2 est une adresse @IPv6(S) conforme au protocole IPv6 (réponse « oui » à l'étape test F60), le serveur DNS# 2 répond positivement à la requête R-AAAA du dispositif client T en lui envoyant l'adresse @IPv6(S) (étape F70). Autrement dit, l'adresse @IPv6(S) est envoyée au dispositif client T dans la réponse à la requête R-AAAA, cette réponse portant le type AAAA conformément à la procédure décrite dans la section 2.3 du document RFC 3596 cité précédemment.

Sinon, cela signifie que la ressource réseau S dispose uniquement d'une connectivité IPv4, et ne dispose pas de connectivité IPv6.

Le serveur DNS# 2 examine alors la valeur extraite de l'option PREFIX64 insérée dans la requête R-AAAA par le dispositif client T (étape F80).

Si la valeur extraite est égale à « ::ffff:0:0 » (autrement dit au préfixe définissant la valeur nulle) (branche (1) en sortie de l'étape F80), cela signifie que le dispositif client T souhaite recevoir l'adresse @IPv4(S) de la ressource réseau S conforme au protocole IPv4 (c.à.d. selon le format IPv4 et non embarquée dans une adresses IPv6 par exemple), pour procéder lui-même à la formation d'une adresse IPv6 à partir de cette adresse IPv4, par exemple en utilisant une fonction CLAT telle qu'évoquée précédemment.

Le serveur DNS# 2 répond alors à la requête R-AAAA du dispositif client T, par l'intermédiaire de son module d'envoi M7, en lui envoyant l'adresse @IPv4(S) de la ressource réseau S (étape F90). Autrement dit, l'adresse @IPv4(S) est envoyée au dispositif client T dans la réponse DNS à la requête R-AAAA, cette réponse portant le type AAAA comme décrit dans le document RFC3596 cité précédemment. L'adresse @IPv4(S) peut être incluse dans la réponse DNS dans la section additionnelle (« Additional Section » en anglais, décrite notamment en section 3.7 du document RFC 1034) de la réponse DNS (l'adresse est alors codée en l'état, dans son format IPv4 originel) ou dans le corps de la réponse. On note que si le corps de la réponse est choisi pour transmettre l'adresse @IPv4(S) au dispositif client T, l'adresse @IPv4(S) est codée sous la forme d'une adresse IPv6 construite par exemple en utilisant le préfixe connu « ::ffff:0:0/96 » (aussi appelée adresse IPv6 « IPv4-mapped » et décrite dans le document RFC 4291). En variante, d'autres formats peuvent être envisagés pour coder l'adresse @IPv4(S).

Il convient de remarquer qu'il est équivalent pour le dispositif client T, s'il souhaite obtenir l'adresse IPv4 de la ressource réseau S lorsque celle-ci bénéficie d'une connectivité IPv4, de transmettre dans sa requête DNS une option PREFIX64 valorisée avec le préfixe connu « ::ffff:0:0/96 » et une option PREFIX64 valorisée avec la valeur nulle.

Ainsi, à titre illustratif, si l'adresse @IPv4(S)= « 198.51.100.1 » et l'option PREFIX64 insérée dans la requête DNS R-AAAA a la valeur nulle « ::ffff:0:0 », le serveur DNS# 2 peut envoyer au dispositif client T une réponse à sa requête DNS contenant, dans le corps de la réponse DNS, l'adresse @IP(S)=«::ffff:0:0:198.51.100.1» contenant l'adresse @IPv4(S).

Si la valeur extraite de l'option PREFIX 64 contient une adresse IPv6 non nulle (branche (2) en sortie de l'étape F80), le serveur DNS# 2 exécute l'algorithme décrit dans le document RFC 6052 pour extraire le préfixe NAT64 à partir duquel cette adresse IPv6 a été formée (étape F100). Puis il utilise le préfixe NAT64 ainsi extrait pour former une adresse IPv6 pour la ressource réseau S à partir de son adresse @IPv4(S) (étape F110). Il répond alors à la requête R-AAAA du dispositif client T en lui envoyant par l'intermédiaire de son module d'envoi M7 l'adresse @IPv6(S) ainsi formée pour la ressource réseau S (étape F120). On note qu'une réponse DNS classique à une requête DNS AAAA peut être utilisée à cet effet.

Si la valeur extraite de l'option PREFIX 64 contient un préfixe NAT64 (branche (3) en sortie de l'étape F80), le serveur DNS# 2 exécute directement les étapes F110 et F120 sans mettre en œuvre l'étape F100.

Le serveur DNS# 2 forme l'adresse @IPv6 pour la ressource réseau S à partir de son adresse @IPv4(S) en tenant compte des instructions transmises le cas échéant par le dispositif client T relatives à la méthode de formation d'adresse IPv6 qui doit être appliquée. De telles instructions peuvent être transmises, comme évoqué précédemment dans la requête DNS R-AAAA via un paramètre défini à cet effet tel que le paramètre Scheme ID décrit auparavant. Si aucune instruction n'est définie par le dispositif client T dans la requête DNS, le serveur DNS# 2 peut appliquer une méthode de formation d'adresses IPv6 configurée par défaut (par exemple, exécution de l'algorithme défini dans le document RFC 6052 et ceci uniquement en cas d'absence d'enregistrements AAAA.).

En outre, si l'on envisage un mode de réalisation dans lequel le serveur DNS#2 est configuré pour appliquer le type d'adresse IP contenu dans l'option PREFIX64 dès lors que la ressource S dispose au moins d'une connectivité IPv4, la réponse du serveur DNS# 2 au dispositif client T peut contenir plusieurs adresses IP si la ressource réseau S dispose d'une double connectivité IPv4 et IPv6. On rappelle que la configuration du serveur DNS# 2 peut résulter de la définition même de l'option PREFIX64 ou d'une instruction du dispositif client T insérée dans la requête DNS R-AAAA comme mentionné précédemment (par exemple dans le paramètre Scheme ID). La pluralité d'adresses IP alors obtenues par le serveur DNS# 2 (qui comprend alors au moins une adresse IPv4 et une adresse IPv6 de la ressource) peuvent être toutes insérées dans le corps de la réponse (selon le format IPv6, y compris les adresses fictives IPv6 construites à partir des adresses IPv4), ou toutes insérées dans la section additionnelle de la réponse DNS (les adresses IPv4 en tant que telles peuvent alors être codées selon le format IPv4), ou être insérées dans les adresses codées selon le format IPv6 dans le corps de la réponse et pour les autres dans la section additionnelle de la réponse DNS.

On note que suivant l'interface de connexion utilisée par le dispositif client T pour accéder à la ressource réseau S, l'adresse IP (ou les adresses IP) renvoyée(s) par le serveur DNS# 2 au dispositif client T en réponse à sa requête AAAA peu(ven)t différer. Ainsi deux dispositifs clients T1 et T2 émettant à destination du serveur DNS# 2 des requêtes DNS de type AAAA visant une ressource réseau « myT3.name.example » qui ne dispose que d'une connectivité IPv4 (@IPv4(S)= « 198.51.100.1 », et comprenant chacune une option PREFIX64 valorisée respectivement à « 2001:db8:1234::/96 » pour T1 et à « 64:ff9b::/96 » pour T2, vont recevoir du serveur DNS# 2 :
- pour le dispositif client T1 : une réponse DNS comprenant l'adresse IPv6 « 2001:db8:1234::198.51.100.1 » ; et
- pour le dispositif client T2 : une réponse DNS comprenant l'adresse IPv6 « 64:ff9b::198.51.100.1 ».
Ainsi, les adresses IPv6 retournées par le serveur DNS# 2 aux dispositifs clients T1 et T2 pour une même ressource réseau ne sont pas forcément identiques. A partir de ces adresses IPv6, les dispositifs clients T1 et T2 peuvent établir des communications avec la ressource réseau S, chacune de ces communications transitant par la fonction NAT64 du réseau IP auquel est connecté chaque dispositif client, c'est-à-dire par la fonction NAT64 configurée avec le préfixe « 2001:db8:1234::/96 » pour T1 et par la fonction NAT64 configurée avec le préfixe « 64:ff9b::/96 » pour T2.

En référence de nouveau à la figure 5, sur réception de la réponse DNS du serveur DNS# 2 à sa requête R-AAAA (étape E70), le dispositif client T extrait l'adresse IP @IP(S) fournie dans la réponse pour la ressource réseau S, afin de l'utiliser pour accéder à la ressource S (étape E80).

Si le dispositif client T avait inclus dans sa requête R-AAAA une valeur nulle ou prédéfinie dans l'option PREFIX64, il utilise l'adresse @IP(S) renvoyée par le serveur DNS# 2 pour construire localement une adresse IPv6 fictive de type « IPv4-converted IPv6 » pour la ressource réseau S, sur la base d'un préfixe NAT64 local avec lequel il a été préalablement configuré. Ce préfixe NAT64 est celui découvert à l'étape E10 par le dispositif client T pour le réseau IP qu'il envisage d'utiliser pour accéder à la ressource S. Puis le dispositif client T utilise l'adresse IPv6 fictive qu'il a construite localement comme adresse destination des paquets envoyés vers la ressource réseau S.

Sinon, le dispositif client T utilise l'adresse @IPv6(S) retournée par le serveur DNS# 2 telle quelle comme adresse destination des paquets envoyés vers la ressource réseau S.

On note qu'un dispositif client T multi-interface doit sélectionner l'interface de connexion à utiliser pour envoyer des paquets de données vers la ressource réseau S en fonction de l'adresse IP retournée par le serveur DNS# 2. En effet, si le dispositif client T dispose de plusieurs couples {NETWORK-ID, PREFIX64} , alors le dispositif client T sélectionne l'interface de connexion NETWORK-ID dont le préfixe NAT64 correspond aux premiers bits de l'adresse IPv6 retournée par le serveur DNS# 2. Par exemple, si le dispositif client T dispose de deux interfaces de connexion {NETWORK-ID=WLAN, PREFIX64= 2001 :db8:1234/96} et {NETWORK-ID= RMNET, PREFIX64=64:ff9b::/96} , l'interface de connexion à utiliser pour envoyer les données vers une adresse « 64:ff9b::1.2.3.4 » retournée par le serveur DNS# 2 est l'interface de connexion RMNET.

En outre, si plusieurs préfixes NAT64 sont fournis dans la requête R-AAAA par le dispositif client T au serveur DNS# 2 correspondant à des interfaces de connexion distinctes du dispositif client T (par exemple le préfixe « 2001:db8:1234/96 » pour le réseau NW1 et le préfixe « 64:ff9b::/96 » pour le réseau NW2), le serveur DNS# 2 transmet autant d'adresses IPv6 que de préfixes en réponse au dispositif client T (dans l'exemple envisagé, une adresse « 2001 :db8: 1234:: 198.51.1 00.1 » et une adresse « 64:ff9b::198.51.100.1 »). Le dispositif client T doit alors utiliser l'adresse IPv6 correspondant au préfixe associé à l'interface de connexion choisie pour envoyer des paquets vers la ressource réseau, autrement dit l'adresse destination « 2001 :db8: 1234:: 198.51.1 00.1 » pour les paquets envoyés via le réseau NW1 et l'adresse « 64:ff9b::198.51.100.1 » pour les paquets envoyés via le réseau NW2.

La sélection de la mauvaise interface de connexion peut avoir des implications sur la qualité d'expérience. En effet, le choix du ou des préfixes à communiquer au serveur DNS permet aux dispositifs clients de contrôler comment une communication sera établie vers une ressource réseau distante.

A titre illustratif, en référence à l'exemple de **la** **figure 9****,** si l'option PREFIX64 contient le préfixe « 2001:db8:1234/96 », alors les données doivent être échangées via le réseau NW1. On note que tout paquet de données ayant comme adresse destination « 2001 :db8: 1234:: 198.51.1 00.1» mais transmis via le réseau NW2 est réacheminé vers le réseau NW1 (car ce réseau annonce le préfixe « 2001:db::/32 ») et risque d'être rejeté par ce réseau car le service NAT64 n'est pas fourni sur l'interface visible depuis le réseau Internet.

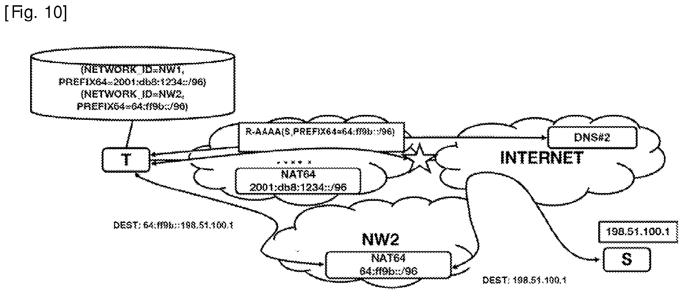

En référence à l'exemple de la **figure 10**, si la réponse DNS contient le préfixe « 64:ff9b::/96 », alors les données doivent être échangées via le réseau NW2. Tout paquet de données ayant comme adresse destination « 64:ff9b::198.51.100.1 » et transmis via le réseau NW1 est rejeté par le réseau NW1 car ce réseau ne dispose pas de route (par exemple de route BGP (Border Gateway Protocol)) pour acheminer le paquet.

Dans le mode de réalisation décrit précédemment, l'option PREFIX64 est insérée par le dispositif client T dans sa requête R-AAAA. Dans un autre mode de réalisation dans lequel le dispositif client T communique avec les réseaux IP via un CPE, l'option PREFIX64 peut être insérée par le CPE. Le procédé d'obtention selon l'invention est alors mis en œuvre par le CPE (qui est alors considéré comme un dispositif client au sens de l'invention). Plus spécifiquement, si le CPE détecte la présence d'une fonction NAT64 dans un réseau IP, alors à réception d'une requête DNS AAAA d'un équipement du réseau local auquel le CPE est raccordé, le CPE modifie la requête pour inclure une option PREFIX64 selon les modalités qui viennent d'être décrites.

Par ailleurs, dans le mode de réalisation décrit, c'est le serveur DNS alternatif DNS# 2 qui met en œuvre le procédé de traitement selon l'invention. Il convient de noter que l'invention s'applique également aux serveurs DNS nominaux, dès lors que le dispositif client T est configuré pour adresser ses requêtes DNS à ces serveurs DNS nominaux.

## Revendications

1. Procédé d'obtention par un dispositif client (T) d'une adresse IP pour accéder à une ressource réseau (S) via au moins un réseau (NW1,NW2) fournissant un service de connectivité IP (Internet Protocol) audit dispositif client, ledit dispositif client disposant uniquement d'une connectivité IPv6, ledit procédé comprenant :
- une étape d'insertion (E60), dans une requête (R-AAAA) d'obtention d'une adresse IPv6 pour accéder à ladite ressource réseau destinée à un serveur DNS, d'une information représentative d'un type d'adresse IP attendu par ledit dispositif client dudit serveur DNS en réponse à ladite requête d'obtention si ladite ressource réseau dispose d'une connectivité IPv4, ledit type d'adresse IP attendu pouvant être une adresse IPv4, à partir de laquelle ledit dispositif client (T) peut former une adresse IPv6, ou une adresse IPv6 fictive ; et
- une étape d'envoi (E70) de ladite requête d'obtention audit serveur DNS.

2. Procédé selon la revendication 1 dans lequel ladite information insérée dans la requête d'obtention comprend au moins un préfixe IPv6 ou au moins une adresse IPv6 comprenant au moins un préfixe IPv6, si ledit type d'adresse IP attendu est une adresse IPv6 formée par le serveur DNS à partir dudit au moins un préfixe IPv6 et d'une adresse IPv4 de ladite ressource réseau (S).

3. Procédé d'obtention selon la revendication 2 dans lequel ledit au moins un préfixe IPv6 est au moins un préfixe IPv6 utilisé par une fonction de conversion de paquets IPv4 en paquets IPv6 mise en œuvre par ledit réseau.

4. Procédé d'obtention selon la revendication 2 ou la revendication 3 dans lequel la requête d'obtention comprend en outre :
- une instruction pour former ladite adresse IPv6 seulement si la ressource réseau dispose uniquement d'une connectivité IPv4 ; ou
- une instruction pour former ladite adresse IPv6 si la ressource réseau dispose d'une connectivité IPv4 même si elle dispose également d'une connectivité IPv6.

5. Procédé d'obtention selon la revendication 1 dans lequel ladite information insérée dans la requête d'obtention est une valeur prédéfinie, connue du serveur DNS, si ledit type d'adresse IP attendu est une adresse IPv4 de ladite ressource réseau.

6. Procédé d'obtention selon l'une quelconque des revendications 1 à 5 dans lequel la requête d'obtention comprend en outre :
- une instruction pour exécuter un algorithme déterminé pour former une adresse IPv6 à partir d'une adresse IPv4 de la ressource réseau ; et/ou
- une instruction pour utiliser un préfixe WKP (Well-Known Prefix) pour former une adresse IPv6 à partir d'une adresse IPv4 de la ressource réseau ; et/ou
- une instruction pour utiliser un suffixe qui garantit une neutralité d'un mécanisme de contrôle d'intégrité d'un pseudo entête d'une couche transport ; et/ou
- une instruction pour insérer une adresse IPv4 dans une section additionnelle d'une réponse à la requête d'obtention.

7. Procédé d'obtention selon l'une quelconque des revendications 1 à 6 comprenant en outre une étape de détermination (E10) si ledit réseau met en œuvre une fonction de conversion de paquets IPv4 en paquets IPv6.

8. Procédé d'obtention selon la revendication 7 comprenant en outre, si ledit réseau met en œuvre une fonction de conversion de paquets IPv4 en paquets IPv6, une étape d'obtention d'au moins un préfixe IPv6 utilisé par ladite fonction de conversion de paquets.

9. Procédé d'obtention selon la revendication 7 ou 8 dans lequel :
- le serveur DNS est un serveur distinct d'un serveur DNS dit « nominal » avec lequel le dispositif client a été configuré par un opérateur du réseau ;
- l'étape de détermination comprend une étape d'envoi, au serveur DNS nominal, d'une requête d'obtention d'une adresse IPv6 pour accéder à une ressource réseau donnée connue pour disposer uniquement d'une connectivité IPv4 ; et
- si une réponse positive est reçue du serveur DNS nominal comprenant une adresse IPv6 pour ladite ressource réseau donnée, le dispositif client détermine que le réseau met en œuvre une fonction de conversion de paquets IPv4 en paquets IPv6.

10. Procédé d'obtention selon la revendication 9 comprenant une étape d'obtention d'un préfixe IPv6 utilisé par ladite fonction de conversion de paquets IPv4 en paquets IPv6 à partir de l'adresse IPv6 contenue dans la réponse positive reçue du serveur DNS nominal.

11. Procédé de traitement, par un serveur DNS (DNS#2) associé à un réseau fournissant un service de connectivité IP à au moins un dispositif client (T) disposant uniquement d'une connectivité IPv6, ledit procédé comprenant :
- une étape de réception (F10), en provenance dudit dispositif client (T), d'une requête d'obtention d'une adresse IPv6 pour accéder à une ressource réseau, et dans laquelle est insérée une information représentative d'un type d'adresse IP attendu par ledit dispositif client dudit serveur DNS en réponse à ladite requête d'obtention si ladite ressource réseau dispose d'une connectivité IPv4, ledit type d'adresse IP attendu pouvant être une adresse IPv4 ou une adresse IPv6 fictive ;
- si ladite ressource réseau dispose d'une connectivité IPv4 :
une étape d'obtention (F50) d'une adresse IPv4 de ladite ressource réseau ; et
une étape d'envoi (F90,F110) d'une réponse à ladite requête d'obtention contenant au moins une adresse IP déterminée par le serveur DNS à partir de ladite adresse IPv4 obtenue et correspondant au type d'adresse IP attendu par le dispositif client.

12. Procédé de traitement selon la revendication 11 dans lequel ladite information insérée dans la requête d'obtention comprend au moins un préfixe IPv6 ou au moins une adresse IPv6 comprenant au moins un préfixe IPv6 et ladite au moins une adresse IP déterminée par le serveur DNS comprend au moins une adresse IPv6 formée par le serveur DNS à partir dudit au moins un préfixe IPv6 et de ladite adresse IPv4 de la ressource réseau obtenue.

13. Procédé de traitement selon la revendication 11 dans lequel ladite information insérée dans la requête d'obtention a une valeur prédéfinie connue du serveur DNS, et ladite au moins une adresse IP déterminée par le serveur DNS est l'adresse IPv4 de la ressource réseau obtenue.

14. Procédé de traitement selon la revendication 13 dans lequel ladite adresse IPv4 est envoyée par le serveur DNS au dispositif client dans le corps de la réponse, codée selon le format IPv6 en utilisant le préfixe « ::ffff:0:0/96 ».

15. Procédé de traitement selon l'une quelconque des revendications 11 à 14 dans lequel l'étape d'envoi et l'étape d'obtention sont mises en œuvre par le serveur DNS seulement si la ressource réseau dispose uniquement d'une connectivité IPv4.

16. Dispositif client (T) connecté à au moins un réseau fournissant au dispositif client un service de connectivité IP, ledit dispositif client disposant uniquement d'une connectivité IPv6 et comprenant :
- un module d'insertion (M1), configuré pour insérer dans une requête d'obtention d'une adresse IPv6 pour accéder à une ressource réseau via ledit réseau, destinée à un serveur DNS, d'une information représentative d'un type d'adresse IP attendu par ledit dispositif client dudit serveur DNS en réponse à ladite requête d'obtention si ladite ressource réseau dispose d'une connectivité IPv4, ledit type d'adresse IP attendu pouvant être une adresse IPv4, à partir de laquelle ledit dispositif client (T) peut former une adresse IPv6, ou une adresse IPv6 fictive ; et
- un module d'envoi (M2), configuré pour envoyer ladite requête d'obtention au serveur DNS.

17. Dispositif client selon la revendication 16 comprenant en outre un module de traduction d'adresses IPv4 en adresses IPv6 activé sur réception d'une réponse du serveur DNS à ladite requête d'obtention comprenant une adresse IPv4 de ladite ressource réseau, ledit module de traduction étant configuré pour traduire ladite adresse IPv4 en une adresse IPv6 en utilisant ladite adresse IPv4 et un préfixe IPv6 utilisé par une fonction de conversion de paquets IPv4 en paquets IPv6 mise en œuvre par le réseau.

18. Serveur DNS (DNS#2) comprenant :
- un module de réception (M4), apte à recevoir en provenance d'un dispositif client connecté à un réseau fournissant audit dispositif client un service de connectivité IP, une requête d'obtention d'une adresse IPv6 pour accéder à une ressource réseau via ledit réseau, ledit dispositif client disposant uniquement d'une connectivité IPv6 ;
- un module de détection (M5), configuré pour détecter dans ladite requête, une information représentative d'un type d'adresse IP attendu par ledit dispositif client dudit serveur DNS en réponse à ladite requête d'obtention si ladite ressource réseau dispose d'une connectivité IPv4, ledit type d'adresse IP attendu pouvant être une adresse IPv4 ou une adresse IPv6 fictive ;
- des modules, activés si ladite ressource réseau dispose d'une connectivité IPv4, et comprenant :
* un module d'obtention (M6) configuré pour obtenir une adresse IPv4 de la ressource réseau ; et
* un module d'envoi (M7), configuré pour envoyer une réponse à ladite requête d'obtention contenant au moins une adresse IP pour accéder à ladite ressource réseau déterminée par le serveur DNS à partir de ladite adresse IPv4 obtenue et correspondant au type d'adresse IP attendu par le dispositif client indiqué par ladite information insérée dans ladite requête d'obtention.

19. Système de communication (1) comprenant :
- au moins un dispositif client (T) selon la revendication 16 ou 17 connecté à au moins un réseau fournissant audit dispositif client un service de connectivité IP, ledit dispositif client disposant uniquement d'une connectivité IPv6 ; et
- au moins un serveur DNS (DNS#22) selon la revendication 18 destiné à être utilisé par le dispositif client pour accéder à une ressource réseau via ledit réseau.

20. Système (1) selon la revendication 19 dans lequel ledit serveur DNS est un serveur DNS public (DNS#2) distinct d'un serveur DNS dit nominal (DNS#11,DNS#21) avec lequel le dispositif client a été configuré par un opérateur dudit réseau.

## Patentansprüche

1. Verfahren zum Erhalten, durch eine Client-Vorrichtung (T), einer IP-Adresse für das Zugreifen auf eine Netzwerkressource (S) via mindestens ein Netzwerk (NW1, NW2), welches der Client-Vorrichtung einen IP(Internet Protocol) -Konnektivitätsdienst bereitstellt, wobei die Client-Vorrichtung ausschließlich über eine IPv6-Konnektivität verfügt, wobei das Verfahren Folgendes beinhaltet:
- einen Schritt des Einfügens (E60), in eine Anfrage (R-AAAA) nach Erhalt einer IPv6-Adresse für das Zugreifen auf die Netzwerkressource, die für einen DNS-Server bestimmt ist, einer Information, die für einen Typ von IP-Adresse repräsentativ ist, den die Client-Vorrichtung von dem DNS-Server als Reaktion auf die Erhaltungsanfrage erwartet, wenn die Netzwerkressource über eine IPv4-Konnektivität verfügt, wobei der erwartete Typ von IP-Adresse eine IPv4-Adresse, anhand derer die Client-Vorrichtung (T) eine IPv6-Adresse bilden kann, oder eine fiktive IPv6-Adresse sein kann; und
- einen Schritt des Sendens (E70) der Erhaltungsanfrage an den DNS-Server.

2. Verfahren nach Anspruch 1, wobei die in die Erhaltungsanfrage eingefügte Information mindestens ein IPv6-Präfix oder mindestens eine IPv6-Adresse, die mindestens ein IPv6-Präfix beinhaltet, beinhaltet, wenn der erwartete Typ von IP-Adresse eine IPv6-Adresse ist, die durch den DNS-Server anhand des mindestens einen IPv6-Präfixes und einer IPv4-Adresse der Netzwerkressource (S) gebildet wird.

3. Erhaltungsverfahren nach Anspruch 2, wobei das mindestens eine IPv6-Präfix mindestens ein IPv6-Präfix ist, das von einer Funktion zur Konvertierung von IPv4-Paketen in IPv6-Pakete, die durch das Netzwerk umgesetzt wird, verwendet wird.

4. Erhaltungsverfahren nach Anspruch 2 oder Anspruch 3, wobei die Erhaltungsanfrage ferner Folgendes beinhaltet:
- eine Anweisung, die IPv6-Adresse nur dann zu bilden, wenn die Netzwerkressource ausschließlich über eine IPv4-Konnektivität verfügt; oder
- eine Anweisung, die IPv6-Adresse zu bilden, wenn die Netzwerkressource über eine IPv4-Konnektivität verfügt, selbst dann, wenn sie auch über eine IPv6-Konnektivität verfügt.

5. Erhaltungsverfahren nach Anspruch 1, wobei die in die Erhaltungsanfrage eingefügte Information ein vordefinierter Wert ist, der dem DNS-Server bekannt ist, wenn der erwartete Typ von IP-Adresse eine IPv4-Adresse der Netzwerkressource ist.

6. Erhaltungsverfahren nach einem der Ansprüche 1 bis 5, wobei die Erhaltungsanfrage ferner Folgendes beinhaltet:
- eine Anweisung, einen bestimmten Algorithmus auszuführen, um eine IPv6-Adresse anhand einer IPv4-Adresse der Netzwerkressource zu bilden; und/oder
- eine Anweisung, ein WKP(Well-Known Prefix)-Präfix zu verwenden, um eine IPv6-Adresse anhand einer IPv4-Adresse der Netzwerkressource zu bilden; und/oder
- eine Anweisung, ein Suffix zu verwenden, das eine Neutralität eines Integritätskontrollmechanismus für einen Pseudo-Header einer Transportschicht garantiert; und/oder
- eine Anweisung, eine IPv4-Adresse in einen zusätzlichen Abschnitt einer Antwort auf die Erhaltungsanfrage einzufügen.

7. Erhaltungsverfahren nach einem der Ansprüche 1 bis 6, das ferner einen Schritt des Bestimmens (E10) beinhaltet, ob das Netzwerk eine Funktion zur Konvertierung von IPv4-Paketen in IPv6-Pakete umsetzt.

8. Erhaltungsverfahren nach Anspruch 7, das ferner, wenn das Netzwerk eine Funktion zur Konvertierung von IPv4-Paketen in IPv6-Pakete umsetzt, einen Schritt des Erhaltens mindestens eines IPv6-Präfixes, das von der Paketkonvertierungsfunktion verwendet wird, beinhaltet.

9. Erhaltungsverfahren nach Anspruch 7 oder 8, wobei:
- der DNS-Server ein Server ist, der sich von einem sogenannten "Standard"-DNS-Server unterscheidet, mit dem die Client-Vorrichtung von einem Betreiber des Netzwerks konfiguriert wurde;
- wobei der Schritt des Bestimmens einen Schritt des Sendens, an den Standard-DNS-Server, einer Anfrage nach Erhalt einer IPv6-Adresse für das Zugreifen auf eine gegebene Netzwerkressource, von der bekannt ist, dass sie ausschließlich über eine IPv4-Konnektivität verfügt, beinhaltet; und
- wenn von dem Standard-DNS-Server eine positive Antwort empfangen wird, die eine IPv6-Adresse für die gegebene Netzwerkressource beinhaltet, die Client-Vorrichtung bestimmt, dass das Netzwerk eine Funktion zur Konvertierung von IPv4-Paketen in IPv6-Pakete umsetzt.

10. Erhaltungsverfahren nach Anspruch 9, das einen Schritt des Erhaltens eines IPv6-Präfixes, das von der Funktion zur Konvertierung von IPv4-Paketen in IPv6-Pakete verwendet wird, anhand der IPv6-Adresse beinhaltet, die in der von dem Standard-DNS-Server empfangenen positiven Antwort enthalten ist.

11. Verarbeitungsverfahren, durch einen DNS-Server (DNS#2), der mit einem Netzwerk assoziiert ist, das mindestens einer Client-Vorrichtung (T), die ausschließlich über eine IPv6-Konnektivität verfügt, einen IP-Konnektivitätsdienst bereitstellt, wobei das Verfahren Folgendes beinhaltet:
- einen Schritt des Empfangens (F10), von der Client-Vorrichtung (T), einer Anfrage nach Erhalt einer IPv6-Adresse für das Zugreifen auf eine Netzwerkressource, und in die eine Information eingefügt ist, die für einen Typ von IP-Adresse repräsentativ ist, den die Client-Vorrichtung von dem DNS-Server als Reaktion auf die Erhaltungsanfrage erwartet, wenn die Netzwerkressource über eine IPv4-Konnektivität verfügt, wobei der erwartete Typ von IP-Adresse eine IPv4-Adresse oder eine fiktive IPv6-Adresse sein kann;
- wenn die Netzwerkressource über eine IPv4-Konnektivität verfügt:
einen Schritt des Erhaltens (F50) einer IPv4-Adresse der Netzwerkressource; und
einen Schritt des Sendens (F90, F110) einer Antwort auf die Erhaltungsanfrage, die mindestens eine IP-Adresse enthält, die durch den DNS-Server anhand der erhaltenen IPv4-Adresse bestimmt wird und dem Typ von IP-Adresse entspricht, den die Client-Vorrichtung erwartet.

12. Verarbeitungsverfahren nach Anspruch 11, wobei die in die Erhaltungsanfrage eingefügte Information mindestens ein IPv6-Präfix oder mindestens eine IPv6-Adresse, die mindestens ein IPv6-Präfix beinhaltet, beinhaltet und die mindestens eine durch den DNS-Server bestimmte IP-Adresse mindestens eine IPv6-Adresse beinhaltet, die durch den DNS-Server anhand des mindestens einen IPv6-Präfixes und der erhaltenen IPv4-Adresse der Netzwerkressource gebildet wird.

13. Verarbeitungsverfahren nach Anspruch 11, wobei die in die Erhaltungsanfrage eingefügte Information einen vordefinierten Wert aufweist, der dem DNS-Server bekannt ist, und die mindestens eine durch den DNS-Server bestimmte IP-Adresse die erhaltene IPv4-Adresse der Netzwerkressource ist.

14. Verarbeitungsverfahren nach Anspruch 13, wobei die IPv4-Adresse durch den DNS-Server in dem Körper der Antwort an die Client-Vorrichtung gesendet wird, codiert gemäß dem IPv6-Format unter Verwendung des Präfixes "::ffff:0:0/96".

15. Verarbeitungsverfahren nach einem der Ansprüche 11 bis 14, wobei der Schritt des Sendens und der Schritt des Erhaltens durch den DNS-Server nur dann umgesetzt werden, wenn die Netzwerkressource ausschließlich über eine IPv4-Konnektivität verfügt.

16. Client-Vorrichtung (T), die mit mindestens einem Netzwerk verbunden ist, das der Client-Vorrichtung einen IP-Konnektivitätsdienst bereitstellt, wobei die Client-Vorrichtung ausschließlich über eine IPv6-Konnektivität verfügt, und die Folgendes beinhaltet:
- ein Einfügemodul (M1), das dazu konfiguriert ist, in eine Anfrage nach Erhalt einer IPv6-Adresse für das Zugreifen auf eine Netzwerkressource via das Netzwerk, die für einen DNS-Server bestimmt ist, eine Information einzufügen, die für einen Typ von IP-Adresse repräsentativ ist, den die Client-Vorrichtung von dem DNS-Server als Reaktion auf die Erhaltungsanfrage erwartet, wenn die Netzwerkressource über eine IPv4-Konnektivität verfügt, wobei der erwartete Typ von IP-Adresse eine IPv4-Adresse, anhand derer die Client-Vorrichtung (T) eine IPv6-Adresse bilden kann, oder eine fiktive IPv6-Adresse sein kann; und
- ein Sendemodul (M2), das dazu konfiguriert ist, die Erhaltungsanfrage an den DNS-Server zu senden.

17. Client-Vorrichtung nach Anspruch 16, die ferner ein Modul zur Übersetzung von IPv4-Adressen in IPv6-Adressen beinhaltet, das bei Empfang einer Antwort von dem DNS-Server auf die Erhaltungsanfrage, die eine IPv4-Adresse der Netzwerkressource beinhaltet, aktiviert wird, wobei das Übersetzungsmodul dazu konfiguriert ist, die IPv4-Adresse unter Verwendung der IPv4-Adresse und eines IPv6-Präfixes, das von einer Funktion zur Konvertierung von IPv4-Paketen in IPv6-Pakete, die durch das Netzwerk umgesetzt wird, verwendet wird, in eine IPv6-Adresse zu übersetzen.

18. DNS-Server (DNS#2), der Folgendes beinhaltet:
- ein Empfangsmodul (M4), das dazu fähig ist, von einer Client-Vorrichtung, die mit einem Netzwerkwerk verbunden ist, das der Client-Vorrichtung einen IP-Konnektivitätsdienst bereitstellt, eine Anfrage nach Erhalt einer IPv6-Adresse für das Zugreifen auf eine Netzwerkressource via das Netzwerk zu empfangen, wobei die Client-Vorrichtung ausschließlich über eine IPv6-Konnektivität verfügt;
- ein Detektionsmodul (M5), das dazu konfiguriert ist, in der Anfrage eine Information zu detektieren, die für einen Typ von IP-Adresse repräsentativ ist, den die Client-Vorrichtung von dem DNS-Server als Reaktion auf die Erhaltungsanfrage erwartet, wenn die Netzwerkressource über eine IPv4-Konnektivität verfügt, wobei der erwartete Typ von IP-Adresse eine IPv4-Adresse oder eine fiktive IPv6-Adresse sein kann;
- Module, die aktiviert werden, wenn die Netzwerkressource über eine IPv4-Konnektivität verfügt, und die Folgendes beinhalten:
* ein Erhaltungsmodul (M6), das dazu konfiguriert ist, eine IPv4-Adresse der Netzwerkressource zu erhalten; und
* ein Sendemodul (M7), das dazu konfiguriert ist, eine Antwort auf die Erhaltungsanfrage zu senden, die mindestens eine IP-Adresse für das Zugreifen auf die Netzwerkressource enthält, welche durch den DNS-Server anhand der erhaltenen IPv4-Adresse bestimmt wird und dem von der Client-Vorrichtung erwarteten Typ von IP-Adresse, der durch die in die Erhaltungsanfrage eingefügte Information angegeben wird, entspricht.

19. Kommunikationssystem (1), das Folgendes beinhaltet:
- mindestens eine Client-Vorrichtung (T) nach Anspruch 16 oder 17, die mit mindestens einem Netzwerk verbunden ist, das der Client-Vorrichtung einen IP-Konnektivitätsdienst bereitstellt, wobei die Client-Vorrichtung ausschließlich über eine IPv6-Konnektivität verfügt; und
- mindestens einen DNS-Server (DNS#22) nach Anspruch 18, der dazu bestimmt ist, von der Client-Vorrichtung für das Zugreifen auf eine Netzwerkressource via das Netzwerk verwendet zu werden.

20. System (1) nach Anspruch 19, wobei der DNS-Server ein öffentlicher DNS-Server (DNS#2) ist, der sich von einem sogenannten Standard-DNS-Server (DNS#11, DNS#21) unterscheidet, mit dem die Client-Vorrichtung von einem Betreiber des Netzwerks konfiguriert wurde.

## Claims

1. Method for a client device (T) to obtain an IP address in order to access a network resource (S) via at least one network (NW1, NW2) providing an IP (Internet Protocol) connectivity service to said client device, said client device having only IPv6 connectivity, said method comprising:
- a step of insertion (E60), into a request (R-AAAA), to obtain an IPv6 address in order to access said network resource, intended for a DNS server, of a piece of information representative of a type of IP address expected by said client device from said DNS server in response to said obtaining request if said network resource has IPv4 connectivity, said expected IP address type being able to be an IPv4 address, from which said client device (T) can form an IPv6 address, or a fake IPv6 address; and
- a step of sending (E70) said obtaining request to said DNS server.

2. Method according to Claim 1, wherein said piece of information inserted into the obtaining request comprises at least one IPv6 prefix or at least one IPv6 address comprising at least one IPv6 prefix, if said expected IP address type is an IPv6 address formed by the DNS server from said at least one IPv6 prefix and an IPv4 address of said network resource (S).

3. Obtaining method according to Claim 2, wherein said at least one IPv6 prefix is at least one IPv6 prefix used by a function for converting IPv4 packets into IPv6 packets implemented by said network.

4. Obtaining method according to Claim 2 or Claim 3, wherein the obtaining request further comprises:
- an instruction to form said IPv6 address only if the network resource has only IPv4 connectivity; or
- an instruction to form said IPv6 address if the network resource has IPv4 connectivity even if it also has IPv6 connectivity.

5. Obtaining method according to Claim 1, wherein said piece of information inserted into the obtaining request is a predefined value, known to the DNS server, if said expected IP address type is an IPv4 address of said network resource.

6. Obtaining method according to any one of Claims 1 to 5, wherein the obtaining request further comprises:
- an instruction to execute a determined algorithm to form an IPv6 address from an IPv4 address of the network resource; and/or
- an instruction to use a WKP (Well-Known Prefix) prefix to form an IPv6 address from an IPv4 address of the network resource; and/or
- an instruction to use a suffix which guarantees neutrality of a mechanism for checking integrity of a pseudo-header of a transport layer; and/or
- an instruction to insert an IPv4 address into an additional section of a response to the obtaining request.

7. Obtaining method according to any one of Claims 1 to 6, further comprising a step of determining (E10) whether said network implements a function for converting IPv4 packets into IPv6 packets.

8. Obtaining method according to Claim 7, further comprising, if said network implements a function for converting IPv4 packets into IPv6 packets, a step of obtaining at least one IPv6 prefix used by said packet conversion function.

9. Obtaining method according to Claim 7 or 8, wherein:
- the DNS server is a server distinct from a so-called "nominal" DNS server with which the client device has been configured by an operator of the network;
- the determination step comprises a step of sending, to the nominal DNS server, a request to obtain an IPv6 address in order to access a given network resource known to have only IPv4 connectivity; and
- if a positive response is received from the nominal DNS server comprising an IPv6 address for said given network resource, the client device determines that the network implements a function for converting IPv4 packets into IPv6 packets.

10. Obtaining method according to Claim 9, comprising a step of obtaining an IPv6 prefix used by said function for converting IPv4 packets into IPv6 packets from the IPv6 address contained in the positive response received from the nominal DNS server.

11. Processing method, by a DNS server (DNS#2) associated with a network supplying an IP connectivity service to at least one client device (T) having only IPv6 connectivity, said method comprising:
- a step of reception (F10), from said client device (T), of a request to obtain an IPv6 address in order to access a network resource, and in which a piece of information is inserted which is representative of a type of IP address expected by said client device from said DNS server in response to said obtaining request if said network resource has IPv4 connectivity, said expected IP address type being able to be an IPv4 address or a fake IPv6 address;
- if said network resource has IPv4 connectivity:
a step of obtaining (F50) an IPv4 address of said network resource; and
a step of sending (F90, F110) a response to said obtaining request containing at least one IP address determined by the DNS server from said IPv4 address obtained and corresponding to the type of IP address expected by the client device.

12. Processing method according to Claim 11, wherein said piece of information inserted into the obtaining request comprises at least one IPv6 prefix or at least one IPv6 address comprising at least one IPv6 prefix and said at least one IP address determined by the DNS server comprises at least one IPv6 address formed by the DNS server from said at least one IPv6 prefix and from said IPv4 address of the network resource obtained.

13. Processing method according to Claim 11, wherein said piece of information inserted into the obtaining request has a predefined value known to the DNS server, and said at least one IP address determined by the DNS server is the IPv4 address of the network resource obtained.

14. Processing method according to Claim 13, wherein said IPv4 address is sent by the DNS server to the client device in the body of the response, coded according to the IPv6 format by using the prefix "::ffff:0:0/96".

15. Processing method according to any one of Claims 11 to 14, wherein the sending step and the obtaining step are implemented by the DNS server only if the network resource has only IPv4 connectivity.

16. Client device (T) connected to at least one network supplying an IP connectivity service to the client device, said client device having only IPv6 connectivity and comprising:
- an insertion module (M1), configured to insert, into a request to obtain an IPv6 address in order to access a network resource via said network, intended for a DNS server, a piece of information representative of a type of IP address expected by said client device from said DNS server in response to said obtaining request if said network resource has IPv4 connectivity, said expected IP address type being able to be an IPv4 address, from which said client device (T) can form an IPv6 address, or a fake IPv6 address; and
- a sending module (M2), configured to send said obtaining request to the DNS server.

17. Client device according to Claim 16, further comprising a module for translating IPv4 addresses into IPv6 addresses activated on reception of a response from the DNS server to said obtaining request comprising an IPv4 address of said network resource, said translation module being configured to translate said IPv4 address into an IPv6 address by using said IPv4 address and an IPv6 prefix used by a function for converting IPv4 packets into IPv6 packets implemented by the network.

18. DNS server (DNS#2) comprising:
- a reception module (M4), capable of receiving, from a client device connected to a network supplying an IP connectivity service to said client device, a request to obtain an IPv6 address in order to access a network resource via said network, said client device having only IPv6 connectivity;
- a detection module (M5), configured to detect, in said request, a piece of information representative of a type of IP address expected by said client device from said DNS server in response to said obtaining request if said network resource has IPv4 connectivity, said expected IP address type being able to be an IPv4 address or a fake IPv6 address;
- modules, activated if said network resource has IPv4 connectivity, and comprising:
* an obtaining module (M6) configured to obtain an IPv4 address of the network resource; and
* a sending module (M7), configured to send a response to said obtaining request containing at least one IP address in order to access said network resource determined by the DNS server from said IPv4 address obtained and corresponding to the type of IP address expected by the client device indicated by said piece of information inserted into said obtaining request.

19. Communication system (1) comprising:
- at least one client device (T) according to Claim 16 or 17 connected to at least one network supplying an IP connectivity service to said client device, said client device having only IPv6 connectivity; and
- at least one DNS server (DNS#22) according to Claim 18, intended to be used by the client device to access a network resource via said network.

20. System (1) according to Claim 19, wherein said DNS server is a public DNS server (DNS#2) distinct from a so-called nominal DNS server (DNS#11, DNS#21) with which the client device has been configured by an operator of said network.
